# EUROPEAN PATENT SPECIFICATION

(11) **EP 1 414 264 B1**
(45) Date of publication and mention of the grant of the patent: **26.10.2016**
(21) Application number: 02755742.0
(22) Date of filing: 01.08.2002
(51) Int. Cl.: G08C 17/02, H04Q 9/04

(54) **REMOTE OPERATION SYSTEM, REMOTE OPERATION METHOD, APPARATUS FOR PERFORMING REMOTE OPERATION AND CONTROL METHOD THEREOF, APPARATUS OPERATED BY REMOTE OPERATION AND CONTROL METHOD THEREOF, AND RECORDING MEDIUM**
FERNBETRIEBSSYSTEM, FERNBETRIEBSVERFAHREN, VORRICHTUNG ZUR DURCHFÜHRUNG EINES FERNBETRIEBS UND STEUERVERFAHREN DAFÜR, VORRICHTUNG, DIE DURCH FERNBETRIEB BETRIEBEN WIRD UND STEUERVERFAHREN DAFÜR UND AUFZEICHNUNGSMEDIUM
SYSTEME DE FONCTIONNEMENT A DISTANCE, PROCEDE DE FONCTIONNEMENT A DISTANCE, APPAREIL DE MISE EN FONCTIONNEMENT A DISTANCE ET SON PROCEDE DE COMMANDE, APPAREIL DE MISE EN ROUTE PAR COMMANDE A DISTANCE ET SON PROCEDE DE COMMANDE ET SUPPORT D'ENREGISTREMENT

(30) Priority: 02.08.2001 JP 2001234980; 18.02.2002 JP 2002040737
(43) Date of publication of application: 28.04.2004
(60) Divisional application: 11160334.6
(73) Proprietor: Sony Corporation, Tokyo 108-0075 (JP)
(72) Inventor: REKIMOTO, Junichi, Sony Computer Science Lab. Inc., Tokyo 141-0022 (JP); AYATSUKA, Yuji, Sony Computer Science Lab. Inc., Tokyo 141-0022 (JP); MATSUSHITA, Nobuyuki, Shinagawa-ku, Tokyo 141-0001 (JP); OBA, Haruo, Sony Corporation, Tokyo 141-0001 (JP)
(74) Representative: D Young & Co LLP
(86) International application number: PCT/JP2002/007840
(87) International publication number: WO 2003/015451

(56) References cited:
- WO-A-00/02344
- WO-A-01/20572
- WO-A-92/20167
- WO-A1-00/17738
- JP-A- 2000 217 167
- JP-A- 2001 142 825
- US-A- 5 959 539
- US-A- 6 133 847

## Description

### [Technical Field]

The present invention relates to a remote control system and a remote control method, a device for performing a remote control operation and a control method therefor, a device operable by remote control operation and a control method therefor, and a storage medium that allow one device to control the operation of another device. More particularly, the invention relates to a remote control system and a remote control method, a device for performing a remote control operation and a control method therefor, a device operable by remote control operation and a control method therefor, and a storage medium in which one device can perform a remote control operation on another device under a suitable operating environment.

More specifically, the invention pertains to a remote control system and a remote control method, a device for performing a remote control operation and a control method therefor, a device operable by remote control operation and a control method therefor, and a storage medium in which a remote control operation can be performed under a suitable operating environment constructed by using operation information for allowing one device to perform a remote control operation on another device. More particularly, the invention relates to a remote control system and a remote control method, a device for performing a remote control operation and a control method therefor, a device operable by remote control operation and a control method therefor, and a storage medium in which a remote control operation can be performed under a suitable operating environment by allowing one device to dynamically obtain operation information concerning another device.

### [Background Art]

As a result of recent technological innovation, various information devices, for example, workstations (WSs) and general computers such as personal computers (PCs), are being developed and widely used.

Generally, information devices are configured such that the user is able to perform operations, for example, command input, by using a keyboard or a mouse or by various operation buttons, which are provided for the information devices as standard features.

Small and light information terminals, for example, cellular telephones and PDAs (Personal Digital Assistants), are also coming into widespread use. Accordingly, there is an increasing demand for exchanging data between such information terminals. For example, the user wishes to operate information devices installed in offices or households (for example, fixed computers, such as desk-top computers, other types of relatively large information devices, and information household electrical appliances), by using a cellular telephone or a PDA which is always carried by the user and is familiar to the user.

Generally, for implementing data exchange between devices, the devices are connected to each other by using cables.

However, wired connection makes the operation troublesome and complicated for the user, and is also impractical because the user has to prepare a connector compatible with each device to be communicated with.

Additionally, in infrared data communication, for example, IrDA (Infrared Data Association), the viewing angle used in the infrared transmitter is narrow. Accordingly, data communication is easily interrupted due to the presence of an obstacle, for example, by the user inadvertently passing through the infrared transmission channel.

Recently, it has been suggested that a plurality of devices be wirelessly connected by using a technique such as a wireless LAN (Local Area Network), for example, IEEE802b.11, or short-distance wireless data communication such as Bluetooth® communication. Since radio communication is nondirectional, the problem of interrupting transmission data due to an obstacle is not presented.

When communication is performed via a wired or wireless network, however, the user must input the address (or address information corresponding to the address) of a communicating device. Normally, since the user cannot memorize the address of each device, he/she prepares an address book in advance and manually inputs the address while referring to it. Accordingly, the operability of current wireless connection between devices is low and is impractical. For example, even when connecting a cellular telephone or a PDA owned by the user to a computer or another information device installed in front of the user, he/she must input the address of the communicating device.

Additionally, it is now assumed that the user wirelessly connects a cellular telephone or a PDA owned by the user to an information device installed in an office or a household, and then remotely controls the information device by using the cellular telephone or PDA, whose operation is familiar to the user. In this case, such a cellular telephone or PDA is not provided with an operating environment compatible with the information device. It would be convenient if a cellular telephone were provided with operation information, such as a GUI (Graphical User Interface) specially used for the operations of household electrical appliances, for example, televisions or audio devices. It is not practical, however, that the operation information of each device is included in a cellular telephone as a standard feature. That is, when operating another device via a portable terminal, the usability of the current system is low.

### [Disclosure of Invention]

Accordingly, it is an object of the present invention to provide a remote control system and a remote control method, a device for performing a remote control operation and a control method therefor, a device operable by remote control operation and a control method therefor, and a storage medium that exhibit excellent characteristics by allowing one device to control the operation of another device under a suitable operating environment.

It is another object of the present invention to provide a remote control system and a remote control method, a device for performing a remote control operation and a control method therefor, a device operable by remote control operation and a control method therefor, and a storage medium that exhibit excellent characteristics by performing a remote control operation under a suitable operating environment constructed by using operation information for allowing one device to perform a remote control operation on another device.

It is still another object of the present invention to provide a remote control system and a remote control method, a device for performing a remote control operation and a control method therefor, a device operable by remote control operation and a control method therefor, and a storage medium, that exhibit excellent characteristics by performing a remote control operation under a suitable operating environment by allowing one device to dynamically obtain operation information concerning another device.

US 5,959,539 describes a method for the remote control of at least one electronic device in which the control data are transmitted from a remote control device to the electronic device. In the method, information data at least regarding the remote control functions of the electronic device to be controlled are transmitted to the remote control device. These information data are stored in the remote control device and called on during a control operation in order to select and transmit the control data necessary for the respective control operation. At least the device identification number and the device type are transmitted to the remote control automatically, for example after the connection of the electronic device to the power supply system.

WO 92/20167 describes a personal communications device having remote control capability.

US 6,133,847 describes a configurable remote control device.

WO 00/02344 describes a method and device for wireless control of at least two different devices.

WO 01/20572 A1 describes remote control of an electronic device through downloading of control information in a mobile station.

The present invention has been made in view of the above-described objects. Aspects of the present invention are set out in the appended claims. A first aspect of the present invention provides a remote control system according to claim 1.

The "system" described above is a logical set of a plurality of devices (or functional modules implementing predetermined functions), and it is not essential that the devices or functional modules be in the same housing.

A second aspect of the present invention provides a remote control method according to claim 8.

In the remote control system according to the first aspect of the present invention or the remote control method according to the second aspect of the present invention, the first device may be a small portable information terminal, such as a cellular telephone or a PDA, owned by a user, and the second device may be a fixed information device, such as a notebook computer, a desk-top computer, or a liquid crystal projector, an information household electrical appliance, such as a television receiver or another AV equipment. Then, by using the portable information terminal whose operation is familiar to the user, the user remotely controls the fixed information device or information household electrical appliance.

That is, in the remote control system according to the first aspect of the present invention or the remote control method according to the second aspect of the present invention, when, for example, the portable information terminal is placed in proximity with the ID recognition unit of the notebook computer, the notebook computer is able to identify the access method, for example, a network address of the portable information terminal, by reading the ID information from the portable information terminal by using the ID recognition unit. Then, the notebook computer establishes a network connection with the portable information terminal.

The notebook computer also sends operation information suitable for the processing state of the notebook computer to the portable information terminal via a network. The operation information may be user interface information indicating an operation screen or an operation method suitable for operating the second device by the first device, and provides a GUI (Graphical User Interface) environment specifically used for operating the device.

For example, if presentation is running, screen information for operating the presentation is transferred to the portable information terminal as the operation information. As a result, the user is able to suitably control remotely the presentation being worked on the notebook computer by using the user interface prepared on the portable information terminal.

The ID information may be a network address of the first device. In this case, the ID recognition unit or step reads the ID information so as to obtain the network address for accessing the first device. Then, the operation information providing means or step transfers the operation information for remotely controlling the second device to the first device by using the obtained network address.

Alternatively, the ID information may be a network address of the second device. In this case, the ID recognition unit or step reads the ID information so as to obtain the network address for accessing the second device. Then, the operaton information providing means or step supplies the operation information for remotely controlling the second device in response to an access request made by using the obtained network address.

The ID information may be possessed by the first device, and the ID recognition unit may be provided for the second device. In this case, by reading the ID information by using the ID recognition unit, the second device is able to obtain the method for accessing the first device.

Alternatively, the ID information may be possessed by the second device, and the ID recognition unit may be provided for the first device. In this case, by reading the ID information by using the ID recognition unit, the first device is able to obtain the method for accessing the second device.

The ID information may be a method for accessing an information storage location, for example, a URL (Uniform Resource Locator), specially provided for the first device. In this case, the ID recognition unit or step obtains the method for accessing the information storage location by reading the ID information. Then, the operation information providing means or step provides the operation information for remotely controlling the second device via the information storage location by using the obtained method.

For example, the operation information providing means or step may upload the operation information onto the information storage location designated by the URL. Alternatively, the operation information providing means or step may write a method for accessing the storage location of the operation information into the information storage location designated by the URL. In the second case, the operation information providing means or step may request a server for storing the information to redirect the location. As a result, the first device is able to obtain the operation information for remotely controlling the second device by accessing the information storage location specially provided for the first device. Redirect is a download procedure for rewriting a resource identifier, for example, a URL, in a server and for returning a target URL.

For example, the ID information or the ID recognition unit may be installed in a place which is associated with a function implemented by the second device to be remotely controlled by the first device. For example, when the second device to be remotely controlled is a liquid crystal projector, the ID information of the liquid crystal projector may be provided on a protection screen on which drawing content is projected. Alternatively, when the second device to be remotely controlled is a television receiver installed in a living room, the ID information of the television receiver may be disposed on a table in the same living room. With this arrangement, the ID information can be disposed within a range in which the ID recognition unit can read the ID information regardless of where the second device to be remotely controlled is installed, thereby making it possible to reliably distribute the operation information.

Alternatively, the ID information or the ID recognition unit may be provided in a peripheral device connected to the second device to be remotely controlled by the first device. For example, if the second device to be remotely controlled by the first device is a desk-top computer, the ID information may be disposed on a user input/output device, for example, a mouse, a keyboard, or a display, locally connected to the computer. With this arrangement, the ID information can be disposed within a range in which the ID recognition unit can read the ID information regardless of where the second device to be remotely controlled is disposed, thereby making it possible to reliably distribute the operation information.

The ID recognition unit may read the ID information according to any one of formats including an RF-ID, touch net, a barcode, a two-dimensional barcode, a cybercode, and infrared communication.

A network for connecting the devices may be formed by, for example, one of a wireless or wired LAN (Local Area Network), Bluetooth® communication, a telephone network and the Internet, or a combination thereof.

A third aspect of the present invention provides a device for remotely controlling a first device or a controls method therefor, according to one of claims 15 and 20.

The operation information may be user interface information indicating an operation screen or an operation method suitable for operating the first device by the device, and provides a GUI (Graphical User Interface) environment specially used for operating the device.

The device for performing a remote control operation or the control method therefor according to the third aspect of the present invention corresponds to a portable information terminal, such as a cellular telephone or a PDA (Personal Digital Assistant), owned by a user, and can be used for a remote control operation on another information device, for example, a computer or a liquid crystal projector, or another information household electrical appliance, for example, a television receiver or AV equipment.

The ID information may be a network address of the device. In this case, the operation information obtaining means or step receives the operation information, sent to the network address, for remotely controlling the first device.

Alternatively, the ID information may be a network address of the first device. In this case, the operation information obtaining means or step obtains the operation information for remotely controlling the first device by using the network address read by the ID recognition means or step.

The ID information may be provided in a place which is associated with a function implemented by the first device to be remotely controlled or may be provided in a peripheral device connected to the first device to be remotely controlled.

The ID information may be a method for accessing an information storage location specially provided for the device. In this case, by distributing the access method to the first device, the first device is able to access the information storage location. By allowing the operation information for remotely controlling the first device or a method for accessing this operation information to be written into the information storage location, the operation information obtaining means or step can obtain the operation information.

For example, the first device may upload the operation information onto the information storage location designated by a URL, or may write the method for accessing the storage location of the operation information into the information storage location designated by the URL. In the second case, the first device may request a server for storing the information to redirect the storage location. As a result, the device is able to obtain the operation information for remotely controlling the first device by accessing the information storage location specially provided for the device.

The ID information may be represented by any one of formats including an RF-ID, touch net, a barcode, a two-dimensional barcode, a cybercode, and infrared communication.

A fourth aspect of the present invention provides a device for being remotely controlled by a first device or a control method therefor, according to any one of claims 26 and 31.

The operation information may be user interface information indicating an operation screen or an operation method suitable for operating the device by the first device, and provides a GUI (Graphical User Interface) environment specially used for operating the device.

The first device may be a portable information terminal, such as a cellular telephone or a PDA (Personal Digital Assistant), owned by a user.

The device may be a relatively large device used in an environment in which the device is installed, such as a notebook computer, a desk-top computer, a liquid crystal projector, or a television receiver.

The ID information may be a network address of the first device. In this case, the operation information providing means or step sends the operation information for remotely controlling the device to the network address.

Alternatively, the ID information may be a network address of the device. In this case, the operation information providing means or step sends the operation information for remotely controlling the device in response to an access request made to the network address.

The ID information may be provided in a place which is associated with a function implemented by the device, or may be provided in a peripheral device connected to the device.

The ID information may be a method for accessing an information storage location specially provided for the first device for remotely controlling the device. In this case, access can be made to this information storage location according to the access method read by identifying the ID. The operation information providing means or step can provide the operation information to the first device by writing the operation information for remotely controlling the device or a method for accessing this operation information.

The ID information may be represented by any one of formats including an RF-ID, touch net, a barcode, a two-dimensional barcode, a cybercode, and infrared communication.

A fifth aspect of the present invention provides a storage medium according to claim 36.

A sixth aspect of the present invention provides a storage medium according to claim 37.

The storage media according to the fifth through sixth aspects of the present invention are media for providing in a computer readable format computer software to a general-purpose computer system that can execute various program codes. Such media are portable media that can be attached and detached, for example, DVD (Digital Versatile Disc), CD (Compact Disc), FD (Flexible Disk), and MO (Magneto-Optical disc). Alternatively, technically, computer software can be provided to a specific computer system via a transmission medium, for example, a network (may be wired or wireless means).

The storage media according to the fifth through sixth aspects of the present invention define the structurally or functionally co-operational relationship between computer software and the storage media so as to implement predetermined functions of the computer software in the computer system. In other words, by installing the predetermined computer software into the computer system via the storage medium according to one of the seventh through tenth aspects of the present invention, the co-operational action can be exerted in the computer system, thereby making it possible to obtain operations and advantages similar to those achieved by the device for performing a remote control operation and the control method therefor according to the third aspect of the present invention or by the device for being operated by remote control operation and a control method therefor according to the fourth aspect of the present invention.

Further objects, features and advantages of the present invention will become apparent from the following detailed description of the preferred embodiments of the present invention with reference to the attached drawings.

### [Brief Description of the Drawings]

Fig. 1 illustrates a device operating environment to which the present invention is applied.
Fig. 2 schematically illustrates the hardware configuration of a notebook computer 10 used in this embodiment.
Fig. 3 schematically illustrates the hardware configuration of a portable information terminal 50 used in this embodiment.
Fig. 4 is a functional block diagram illustrating an operation for reading an RF-ID from an RF tag.
Fig. 5 illustrates an operation for reading ID information by using touch net.
Fig. 6 illustrates an example of the configuration of a linear barcode.
Fig. 7 illustrates an example of the configuration (stack format) of a two-dimensional barcode.
Fig. 8 illustrates an example of the configuration (matrix format) of the two-dimensional barcode.
Fig. 9 illustrates an example of the configuration of a cybercode.
Fig. 10 is a flowchart illustrating the operation performed by the notebook computer 10 in a device operating environment 1 according to this embodiment.
Fig. 11 is a flowchart illustrating the operation performed by the portable information terminal 50 in the device operating environment 1 according to this embodiment.
Fig. 12 illustrates a device operating environment 1-2 according to another embodiment of the present invention.
Fig. 13 illustrates an example of the configuration of a GUI, displayed on the display screen of the portable information terminal 50, suitable for operating a liquid crystal projector 10-2.
Fig. 14 illustrates a device operating environment 1-3 according to still another embodiment of the present invention.
Fig. 15 illustrates a device operating environment 1-4 according to a further embodiment of the present invention.
Fig. 16 illustrates an example of the configuration of a GUI, displayed on the display screen of the portable information terminal 50, suitable for operating a television receiver.
Fig. 17 illustrates a device operating environment 1-5 according to a yet further embodiment of the present invention.
Fig. 18 illustrates a device operating environment 1-6 according to a further embodiment of the present invention.
Fig. 19 illustrates an example of the configuration of an operation information page of a TV receiver.
Fig. 20 illustrates a modification to the device operating environment 1-6 shown in Fig. 18.
Fig. 21 illustrates an example of an operation information page of a video recording/playback device.
Fig. 22 is a flowchart illustrating the operation performed by a device to be remotely operated in the device operating environment 1-6 according to a further embodiment of the present invention.
Fig. 23 is a sequence diagram illustrating a communication procedure for reading ID information by taking the security into consideration.
Fig. 24 illustrates a device operating environment 1-7 according to a further embodiment of the present invention.
Fig. 25 schematically illustrates the functional configuration of a wireless module 101 (102) used for communication between devices in the device operating environment 1-7.
Fig. 26 is a sequence illustrating a communication procedure when a wireless communication function between devices is implemented by using Bluetooth® communication in the device operating environment 1-7.

### [Best Mode for Carrying Out the Invention]

An embodiment of the present invention is described in detail below with reference to the drawings.

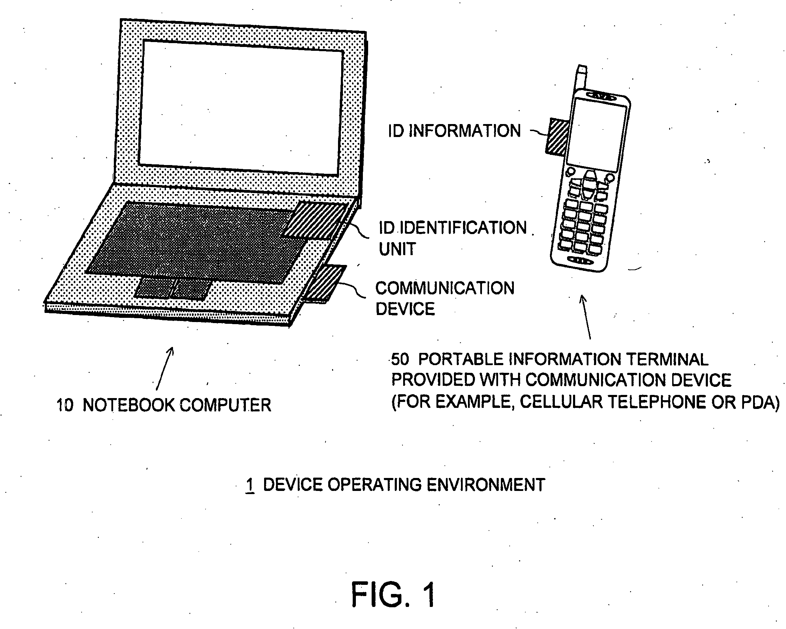

Fig. 1 illustrates a device operating environment 1 to which the present invention is applied. As shown in Fig. 1, in the device operating environment 1, an information processing device 10, for example, a notebook computer, used by the user, and a small portable information terminal 50, for example, a cellular telephone or a PDA (Personal Digital Assistant), owned by the user are provided.

In the example shown in Fig. 1, the portable information terminal 50 is provided with a communication device connected to a network, such as a cellular telephone network, a wireless LAN (Local Area Network), for example, IEEE802.11b, or short-distance wireless data communication, for example, Bluetooth® communication, and also possesses ID information. In this embodiment, the ID information possessed by the portable information terminal 50 indicates the method for accessing the portable information terminal 50 itself. As the access method, a network address, for example, an IP address, resource ID information, for example, a URL (Uniform Resource Locator) or URI (Uniform Resource Identifier), a telephone number, and other ID numbers can be used. The portable information terminal 50 is provided with a user interface, for example, a screen, operation buttons, and input keys for operating the terminal.

The notebook computer 10 also includes a communication device connected to a network, for example, a telephone network, a wireless LAN (Local Area Network), for example, IEEE802b.11b, or short-distance wireless data communication, for example, Bluetooth® communication, and also includes an ID recognition unit for reading ID information from the portable information terminal 50.

By reading the ID information from the portable information terminal 50 by using the ID recognition unit, the notebook computer 10 is able to obtain the method for accessing the portable information terminal 50, for example, the network address. The ID recognition unit may be attached to the portable information terminal 50 rather than to the notebook computer 10, in which case, the portable information terminal 50 reads the ID information of the notebook computer 10, i.e., the network address.

In the device operating environment 1 shown in Fig. 1, the user places the portable information terminal 50 in proximity with the ID recognition unit of the notebook computer 10. By reading the ID information from the portable information terminal 50 by using the ID recognition unit, the notebook computer 10 is able to obtain the method for accessing the portable information terminal 50, such as the network address. By using this network address, the notebook computer 10 establishes a network connection with the portable information terminal 50 so that they can communicate with each other.

The notebook computer 10 also sends operation information suitable for the processing state of the notebook computer 10 to the portable information terminal 50 via a network. This operation information includes user interface information, for example, an operation screen (GUI: Graphical User Interface) suitable for operating the notebook computer 10 by the portable information terminal 50, and other items of information, for example, the operation method.

If, for example, presentation software is running on the notebook computer 10, screen information (described below) for operating the presentation by using the display screen of the portable information terminal 50 is transferred to the portable information terminal 50 as the operation information via a network. As a result, the user is able to remotely control the presentation being worked on the notebook computer 10 by using the operation screen and the operation buttons of the portable information terminal 50.

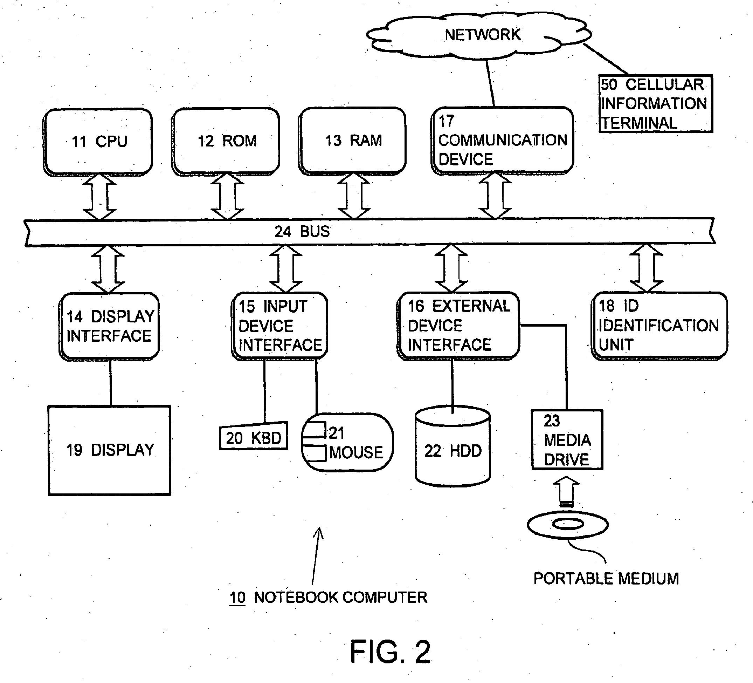

Fig. 2 schematically illustrates the hardware configuration of the notebook computer 10 used in this embodiment.

A CPU (Central Processing Unit) 11, which serves as the main controller, executes various applications under the control of an operating system (OS). As shown in Fig. 2, the CPU 11 is interconnected to other devices (described below) via a system bus 24.

A ROM (Read Only Memory) 12 is a read only memory used for permanently storing a self-diagnostic program (POST) executed when the system 10 is started, or a code group for performing input/output operations (BIOS). A RAM 13 is a random access memory used for storing program code executed by the CPU 11 or for temporarily storing running work data.

A display interface 14 is a display-output-dedicated interface controller for processing drawing commands issued by the CPU 11. Drawing data processed by the display controller 14 is temporarily written into, for example, a frame buffer (not shown), and is then output to a display 19.

An input device interface 15 is a device for connecting a user input device, for example, a keyboard 20 or a mouse 21, to the system 10.

A communication device 17, which is a network interface card (NIC), a modem, or a Bluetooth controller, connects the system 10 to a local network, for example, a LAN (Local Area Network), a public telephone network, or a wide area network, for example, the Internet. A plurality of host devices are present on the network, and the system 10 is able to access the host devices according to a predetermined access method. As the access method, an IP address or other types of network addresses, a URL (Uniform Resource Locator)/URI (Uniform Resource Identifier), a telephone number, and other ID numbers can be used. One of the host devices is the portable information terminal 50.

Software programs or data content can be distributed on the network. For example, an application program for performing a network connection, an application program for providing operation information, and an application program for performing a remote control operation by using a portable information terminal can be downloaded via the network.

An external device interface 16 is a device for connecting external devices, for example, a hard disk drive (HDD) 22 and a media drive 23, to the system 10.

The HDD 22 is a known external storage device having a built-in magnetic disk as a storage carrier, and is excellent over other external storage devices in terms of the storage capacity, the data transfer rate, etc. Placing software programs on the HDD 22 in an executable manner is referred to as "installing" the programs on the system 10. Generally, in the HDD 22, the program code of the operating system to be run by the CPU 11, application programs, device drivers, etc. are stored in a non-volatile manner. An application program for performing a network connection, an application program for providing operation information, and an application program for performing a remote control operation by using a portable information terminal can be installed on the HDD 22.

The media driver 23 is a device for loading portable media, for example, a CD (Compact Disc), a MO (Magneto-Optical disc), or a DVD (Digital Versatile Disc), so as to access the data recording surface of the portable medium.

Portable media are mainly used for saving software programs or data files as backup data in a computer-readable format, or for transferring (including selling and distributing) such data between systems. An application program for performing a network connection, an application program for providing operation information, and an application program for performing a remote control operation by using a portable information terminal can be physically distributed between a plurality of devices by using such portable media.

An ID recognition unit 18 is a device for reading ID information stored in an external device, for example, the portable information terminal 50. The ID recognition method is not particularly restricted, and any method can be used as long as one device is able to read ID information of the other device without the need to establish a connection on the network.

An example of the computer 10, such as that in Fig. 2, is a "PC/AT (Personal Computer/Advanced Technology)"-type IBM-compatible personal computer or a succeeding machine. Of course, a computer provided with another architecture can be used as the computer 10 of this embodiment.

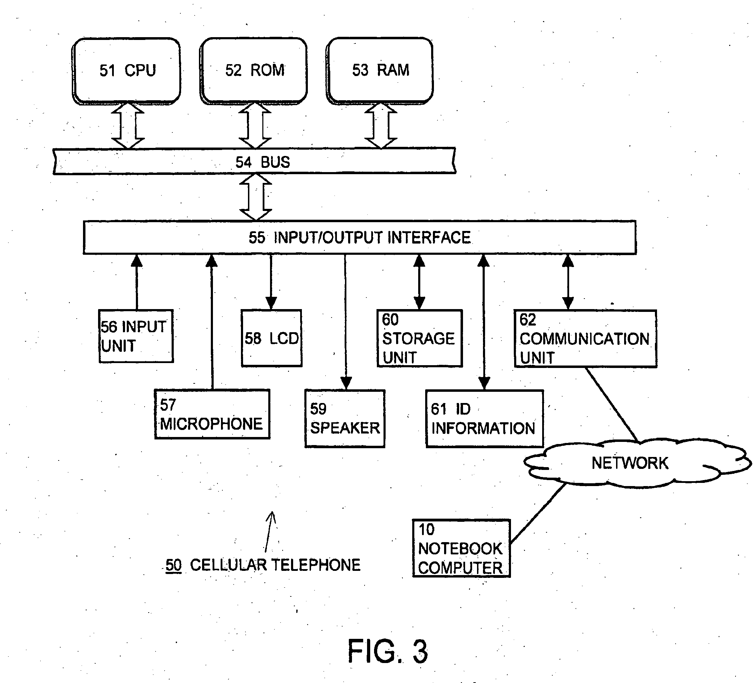

Fig. 3 schematically illustrates the hardware configuration of a cellular telephone that can be used as the portable information terminal 50 of this embodiment.

A CPU (Central Processing Unit) 51, which serves as the main controller, executes various applications under the control of an operating system (OS). As shown in Fig. 3, the CPU 51 is interconnected to other devices (described below) via a bus 54.

A ROM (Read Only Memory) 52 is a read only memory used for permanently storing a self-diagnostic program (POST) executed when the portable information terminal 50 is started, or a code group for performing input/output operations (BIOS) via the bus 54. A RAM 53 is a random access memory used for storing program code executed by the CPU 51 or for temporarily storing work data in progress.

The cellular telephone 50 includes a user input unit 56 formed of, for example, operation buttons, an audio-input microphone 57, a screen-output liquid crystal display 58, an audio-output speaker 59, a storage unit 60 for storing various items of information, ID information 61, and a network-connecting communication unit 62. The above-described elements are connected to the bus 54 via an input/output interface 55.

The communication unit 62 connects the cellular telephone 50 to a cellular telephone network, a local area network, for example, a LAN, or a wide area network, for example, the Internet. A plurality of host devices are present on the network, and the system 10 is able to access the host devices according to a predetermined access method.

As the access method, a network address, for example, an IP address, a URL (Uniform Resource Locator)/URI (Uniform Resource Identifier), a telephone number, and other ID numbers can be used. The method for accessing the cellular telephone 50 itself is represented by the ID information 61. The ID information 61 is stored in a format readable by the ID recognition unit 18 (described above).

The ID recognition method is not particularly restricted for implementing the present invention, and any method can be employed as long as one device is able to read the ID information of the other device without the need to establish connection on the network. As the ID recognition method, an RF-ID (non-contact tag), touch net, a barcode, a two-dimensional barcode, or infrared data communication may be used.

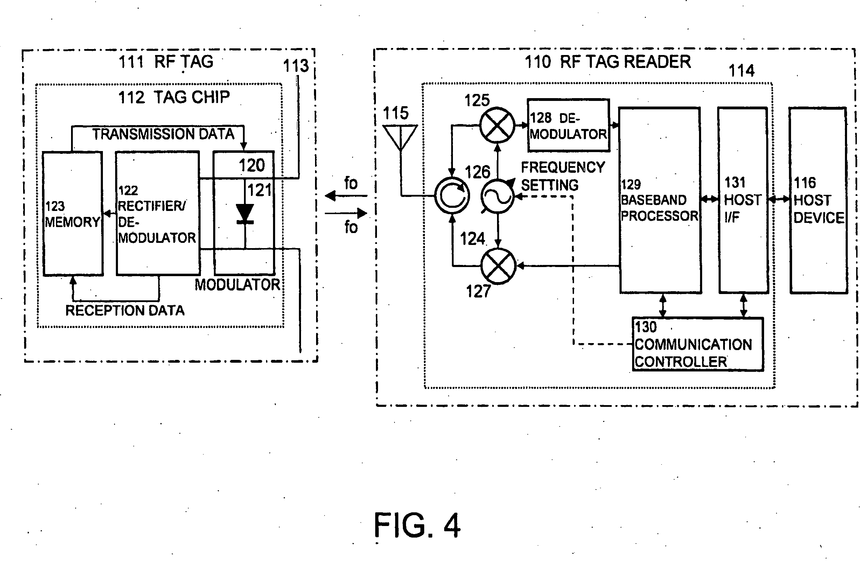

The ID recognition method using an RF-ID can be employed by a combination of an RF tag as the ID information 61 attached to the portable information terminal 50 and the ID recognition unit 18 for reading the RF-ID from the RF tag. Fig. 4 is a functional block diagram illustrating the operation for reading the RF-ID from the RF tag. In Fig. 4, reference numeral 111 indicates an RF tag carrying ID information, which consists of a tag chip 112 and an antenna 113. As the antenna 113, a half-wave dipole antenna can be used. The tag chip 112 consists of a modulator 120, a rectifier/demodulator 122, and a memory 123.

Radio waves fₒ transmitted from an RF tag reader 110, which serves as the ID recognition unit, are received by the antenna 113 and are rectified by the rectifier/demodulator 122 so as to be converted into DC power. This DC power starts the operation of the demodulation function and is identified as a read signal for the RF tag 11. The generated power is supplied to the memory 123 and also to the modulator 120. The memory 123 reads the ID information stored therein and sends it to the modulator 120 as transmission data. The modulator 120 is formed as a diode switch 121, which is repeatedly turned ON/OFF by the transmission data. In this case, the radio waves from the RF tag reader 110 are absorbed in the RF tag 111. The radio waves from the RF tag reader 110 are reflected and return to the transmission source. Such a communication method is referred to as the "back-scatter technique". In this manner, the RF tag 111 is able to send information stored therein to the RF tag reader 110 without the need to supply power.

The RF tag reader 110 consists of a tag reading module 114 and an antenna 115 connected to the tag reading module 114, and is used by being connected to a host device. The host device is an information terminal, for example, the above-described notebook computer, and reports a reading instruction given by the RF tag 111 to a communication controller 130 via a host interface 131. Upon receiving the tag read command from the communication controller 130, a baseband processor 129 edits and filters transmission data, and then sends a baseband signal to an ASK (Amplitude Shift Keying) modulator 127. The ASK modulator 127 performs ASK modulation on the baseband signal with frequency fₒ of a frequency synthesizer 126. The frequency of the frequency synthesizer 126 is set by the communication controller 130. The ASK-modulated transmission signal is radiated to the RF tag 111 from the antenna 115 via a circulator 124.

A reflection signal returned from the RF tag 111 according to the back-scatter technique, which has the same frequency as the signal transmitted from the RF tag reader 110, is received by the antenna 115 and is input into a mixer 125. Since the same local frequency fₒ as that when the signal is transmitted is input into the mixer 125, the signal modulated in the RF tag 111 is output from the mixer 125. A demodulator 128 demodulates the 1/0 data of this signal and sends the demodulated data to the baseband processor 129. The baseband processor 129 decodes the data into the ID information in the RF tag 111. This data is transferred to the host device from the host interface 131 according to an instruction from the communication controller 130.

As described above, the RF tag reader 110 is able to read the information within the RF tag 111. The RF tag reader 110 is also able to write data into the RF tag 111 in a manner similar to the above-described operation.

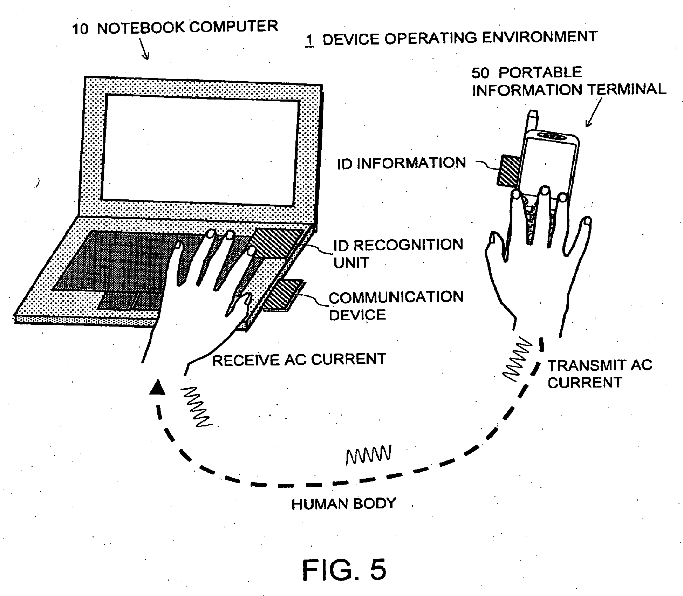

Touch net is a method for transmitting information based on an AC current flowing via the user's body touching both the notebook computer 10 and the cellular telephone 50. The ID recognition unit 18 is able to read the ID information 61 via the human body. Fig. 5 illustrates the transmission of information by touch net. In this case, the ID information 61 stored in the portable information terminal 50 is formed of a generator for generating an AC current corresponding to the ID information and a transmission electrode (not shown). The ID recognition unit 18 includes a reception electrode for receiving an AC current via the human body, and performs AM modulation and A/D conversion on the received current, and then performs digital signal processing on the converted signal so as to decode the ID information, i.e., the network address of the cellular telephone 50.

In the touch net communication implemented via the human body, the configuration disclosed in, for example, Japanese Unexamined Patent Application Publication No. 7-170215 assigned to the present applicant can be used. Since the human body can be considered as a conductive container of saline, it becomes a conductor at a few megahertz (known). For example, the DC resistance across the hands measured by a tester indicates a value from 500 kΩ to 2 or 3 MΩ, depending on the condition of the hands.

According to the ID recognition method using a barcode or a two-dimensional barcode, the portable information terminal 50 stores the ID information 61 therein by attaching the barcode or the two-dimensional barcode to the terminal body. The ID recognition unit 18 of the notebook computer 10 is formed by a barcode reader (known in this field).

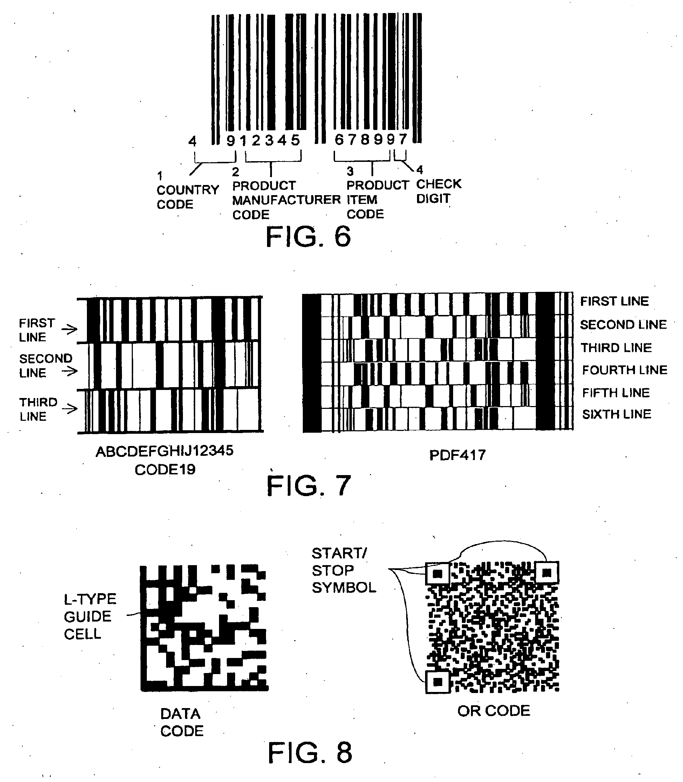

A linear barcode is formed such that the barcode, for example, a JAN or ITF code, is linearly disposed (see Fig. 6). The two-dimensional barcode is a type of barcode having information in two dimensions, i.e., in the horizontal direction and the vertical direction. It is necessary that a two-dimensional code scanner as the ID reading means read the two-dimensional code while identifying it as a plane. The two-dimensional code is largely divided into a stack format and a matrix format (see
http://www.barcode.co.jp/barcode/2-tokusyu.html).

The stack format is a barcode formed by displaying information in the vertical and horizontal directions by stacking linear barcodes in the vertical direction. In this structure, the linear barcodes are shrunk and are vertically stacked in a plurality of lines (see Fig. 7). The symbol is represented by thin bars and thick bars (or narrow spaces and wide spaces) as in the linear barcode, and the reading method is substantially the same as that of the linear barcode.

The matrix format is a barcode formed by displaying information alternately in black and white cells in a matrix mosaic (see Fig. 8). For identifying data rows, a start sign and a stop sign are added to each row, and it does not matter which row is read first, and when all the rows are read, the barcode is deciphered as data.

According to the ID recognition method using a cybercode, the portable information terminal 50 stores the ID information 61 by attaching a cybercode to the terminal body. The ID recognition unit 18 of the notebook computer 10 is formed by an image-pickup and image-recognition device for identifying an image by capturing the cybercode.

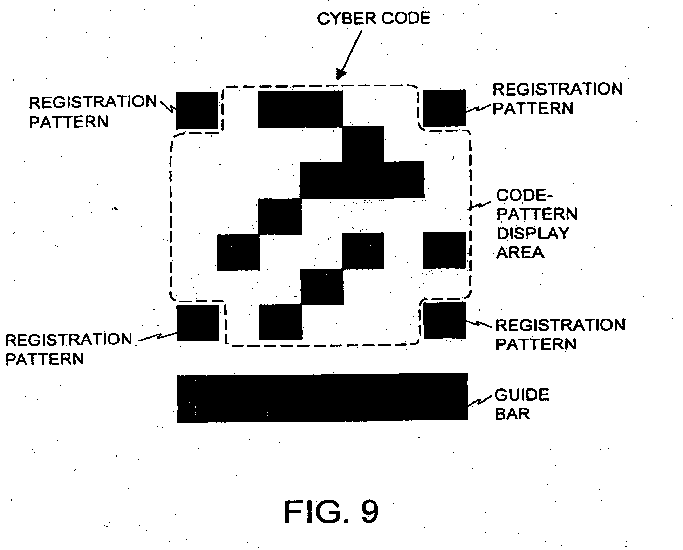

A cybercode is one type of two-dimensional barcode, and it is formed of, as shown in Fig. 9, a "guide-bar display area" indicating the presence of a cybercode and a "code-pattern display area" indicating a two-dimensional code pattern. The code-pattern display area is formed of n×m-matrix cells (7×7 cells in Fig. 9), and ID-information can be provided by representing the cells in binary format in black or white. It should be noted that the cells at the four corners of the code-pattern display area are always indicated in a black pattern, not as the ID information, but as the registration pattern.

The cybercode recognition process is largely divided into a step of binarizing a captured image, a step of finding candidates of the guide bar from the binary image, a step of searching for the corner cells based on the position and direction of the guide bar, and a step of decoding the image bit map pattern in response to the detection of the guide bar and the corner cells. Error bit checking is also performed to determine that a valid cybercode is contained in the captured image, and the ID information and the positional information of the code can be read. Also, distortion caused by the displacement of a camera or an object can be calculated and compensated for based on the positions of the corner cells.

Details of the cybercode are also disclosed in, for example, Japanese Unexamined Patent Application Publication No. 2000-82108 (TWO-DIMENSIONAL CODE RECOGNITION PROCESSING METHOD, TWO-DIMENSIONAL CODE RECOGNITION PROCESSING DEVICE, AND MEDIUM") assigned to the present applicant.

As described above, the user simply places the portable information terminal 50 in proximity with the ID recognition unit of the notebook computer 10, and then, the ID recognition unit 18 can read the ID information 61 from the portable information terminal 50. The notebook computer 10 is thus able to obtain the method for accessing the portable information terminal 50. By using the access method, for example, the network address, the notebook computer 10 establishes a network connection with the portable information terminal 50 so that they can communicate with each other. The notebook computer 10 also sends operation information suitable for the processing state of the notebook computer 10 to the portable information terminal 50 via a network. As a result, the portable information terminal 50 is able to remotely control the notebook computer 10 by using a suitable GUI screen.

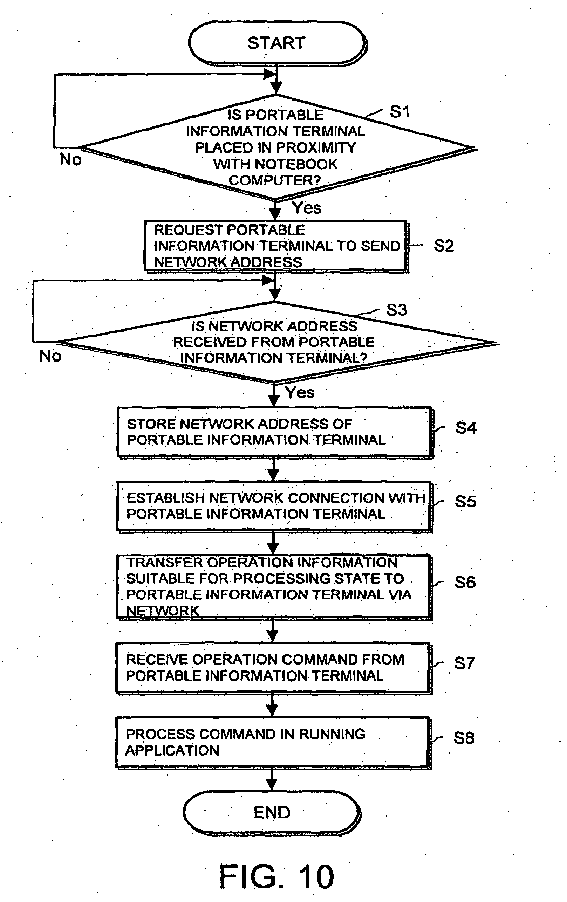

Fig. 10 is a flowchart illustrating the operation performed by the notebook computer 10 under the device operating environment 1 according to this embodiment. In practice, this operation is implemented by executing a predetermined program code by the CPU 11. The operation characteristics of the notebook computer 10 are described below with reference to the flowchart of Fig. 10.

When the portable information terminal 50 owned by the user is placed in proximity with the notebook computer 10 (step S1), the notebook computer 10 requests the portable information terminal 50 to send the network address (or the method for accessing the portable information terminal 50 written in another format) (step S2).

The portable information terminal 50 possesses the access method, for example, the network address, as the ID information. In practice, the transmission request of the network address is made by reading the ID information by the ID recognition unit 18. The ID recognition method is not particularly restricted, and a non-contact recognition method, for example, the above-described RF-ID, touch net, barcode, two-dimensional barcode, cybercode, or infrared communication, can be used.

Upon receiving the network address of the portable information terminal 50 by identifying the ID information 16 (step S3), the computer 10 stores the network address in a writable memory, for example, the RAM 13, or a non-volatile storage unit, for example, the HDD 22 (step S4).

Then, by using the obtained network address, the notebook computer 10 establishes connection with the portable information terminal 50 (step S5).

Then, the notebook computer 10 sends operation information suitable for the processing state of the computer 10 to the portable information terminal 50 via a network (step S6).

This operation information includes user interface information, for example, an operation screen (GUI: Graphical User Interface) suitable for operating the notebook computer 10 by the portable information terminal 50. If, for example, presentation software is running on the notebook computer 10, GUI screen information for operating the presentation by using the display screen of the portable information terminal 50 is transferred to the portable information terminal 50 as the operation information via a network.

As a result, the user is able to remotely control the presentation being worked on the notebook computer 10 by using the operation screen and the operation buttons of the portable information terminal 50. That is, the notebook computer 10 receives a command sent from the portable information terminal 50 via a network (step S7), and performs command processing in a running application (step S8).

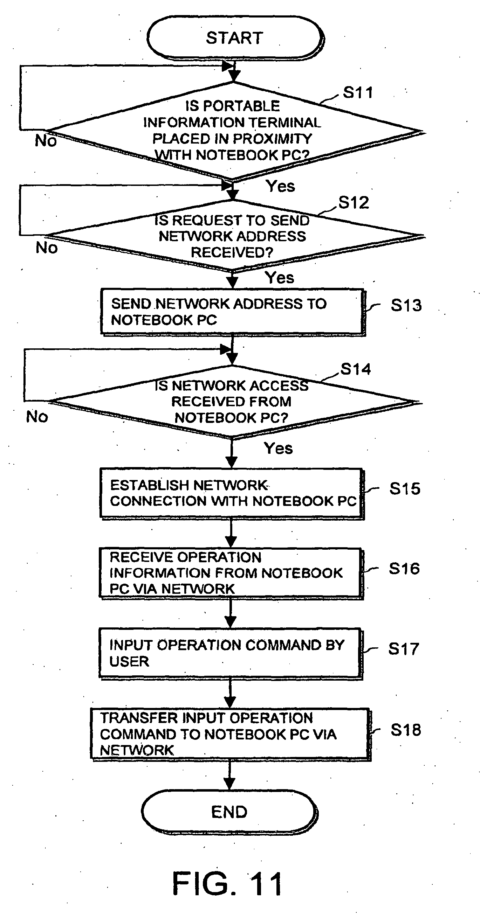

Fig. 11 is a flowchart illustrating the operation performed by the portable information terminal 50 under the device operating environment 1 according to this embodiment. In practice, this operation is implemented by executing a predetermined program code by the CPU 51. The operation characteristics of the portable information terminal 50 are described below with reference to the flowchart of Fig. 11.

When the portable information terminal 50 owned by the user is placed in proximity with the notebook computer 10 (step S11), the portable information terminal 50 first receives a request to send the network address (or the method for accessing the portable information terminal 50 written in another format) from the notebook computer 10 (step S12).

The portable information terminal 50 possesses the access method, for example, the network address, as the ID information. The transmission of the network address is performed by reading the ID information by the ID recognition unit 18 (step S13). The ID recognition method is not particularly restricted, and the above-described RF-ID, touch net, barcode, two-dimensional barcode, cybercode, or infrared communication, can be used.

The notebook computer 10 attempts to establish a network connection with the portable information terminal 50 based on the received network address (step S14). In response to this attempt, the portable information terminal 50 establishes a network connection with the notebook computer 10 (step S15).

The portable information terminal 50 receives the operation information sent from the notebook computer 10 via a network (step S16).

This operation information includes user interface information, for example, an operation screen (GUI:
Graphical User Interface) suitable for operating the notebook computer 10 by the portable information terminal 50. If, for example, presentation software is running on the notebook computer 10, GUI screen information for operating the presentation by using the display screen of the portable information terminal 50 is transferred to the portable information terminal 50 via a network as the operation information.

As a result, the user is able to remotely control the presentation being worked on the notebook computer 10 by using the operation screen and the operation buttons displayed on the portable information terminal 50 which can be easily handed by the user. More specifically, when the user inputs an operation command for the notebook computer 10 via the input unit 56 (step S17), the portable information terminal 50 sends the input operation command to the notebook computer 10 via a network (step S18). In response to this operation command, the notebook computer 10 performs command processing in a running application.

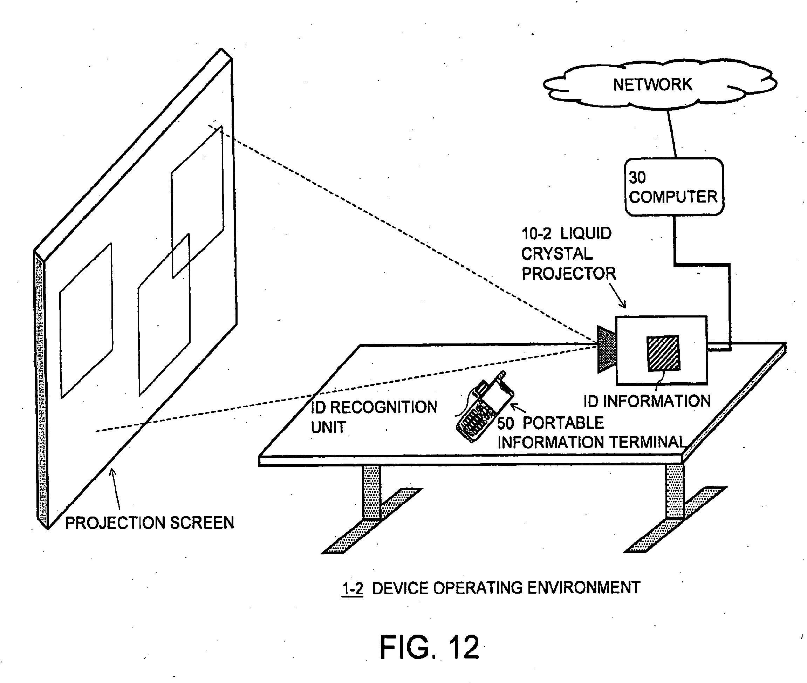

Fig. 12 illustrates a device operating environment 1-2 according to another embodiment of the present invention. In this device operating environment 1-2, an information processing device 10-2, for example, a liquid crystal projector used by the user, and the small portable information terminal 50, for example, a cellular telephone or a PDA (Personal Digital Assistant), owned by the user are provided.

In the example shown in Fig. 12, the liquid crystal projector 10-2 possesses ID information, and is also provided with a communication device connected to a network, such as a cellular telephone network, a wireless LAN (Local Area Network), for example, IEEE802.11b, or short-distance wireless data communication, for example, Bluetooth® communication. Alternatively, instead of the liquid crystal projector 10-2 itself, a computer 30 for driving the display of the liquid crystal projector 10-2 may be provided with a communication device. In this embodiment, the ID information possessed by the liquid crystal projector 10-2 indicates the network address of the liquid crystal projector 10-2 or the method for accessing the site (for example, the computer 30 for transferring drawing information to the liquid crystal projector) in which operation information of the liquid crystal projector 10-2 is stored.

The portable information terminal 50 is provided with a communication device connected to a network such as a cellular telephone network, a wireless LAN (Local Area Network), for example, IEEE802.11b, or short-distance wireless data communication, for example, Bluetooth® communication, and also possesses an ID recognition unit for reading the ID information from the liquid crystal projector 10-2. The portable information terminal 50 is also provided with user interfaces, for example, a screen, operation buttons, and input keys, for performing a device operation.

By reading the ID information from the liquid crystal projector 10-2 by using the ID recognition unit provided for the portable information terminal 50, the portable information terminal 50 is able to obtain the method for accessing the liquid crystal projector 10-2 or the site storing the operation information of the liquid crystal projector 10-2.

In the device operating environment 1-2 shown in Fig. 12, the user places the portable information terminal 50 in proximity with the ID information of the liquid crystal projector 10-2. In response to this operation, the ID recognition unit reads the ID information from the liquid crystal projector 10-2 so that the portable information terminal 50 can identify the method for accessing the liquid crystal projector 10-2 or the site storing the operation information of the liquid crystal projector 10-2. By using the access method, for example, the network address or a URL, obtained by reading the ID, the portable information terminal 50 establishes a network connection with the liquid crystal projector 10-2 or the computer 30 storing the operation information of the liquid crystal projector 10-2 so that they can communicate with each other.

The liquid crystal projector 10-2 or the computer 30 storing the operation information of the liquid crystal projector 10-2 also sends or downloads the operation information suitable for the processing state of the liquid crystal projector 10-2 or the computer 30 to the portable information terminal 50 via a network. This operation information includes user interface information, for example, an operation screen (GUI: Graphical User Interface) suitable for operating the notebook computer 10 by the portable information terminal 50.

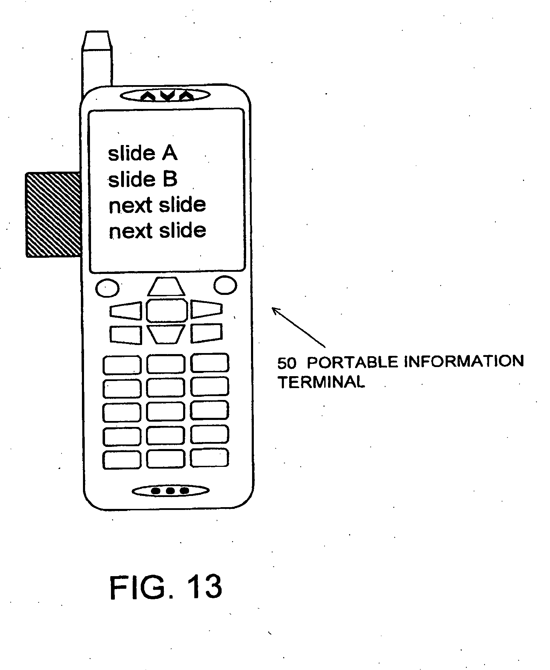

As a result, on the display screen of the portable information terminal 50, a GUI screen, such as that shown in Fig. 13, suitable for operating the liquid crystal projector 10-2 is presented. The user is then able to input an operation, for example, specifying a slide to be projected on the projection screen, via the GUI screen shown in Fig. 13. An operation command input by the user is sent to the liquid crystal projector 10-2 or the computer 30 storing the operation information of the liquid crystal projector 10-2 via a network. Accordingly, the user is able to remotely control the liquid crystal projector 10-2 efficiently and easily by using desired operation buttons while referring to a menu list displayed on the GUI screen of the portable information terminal 50.

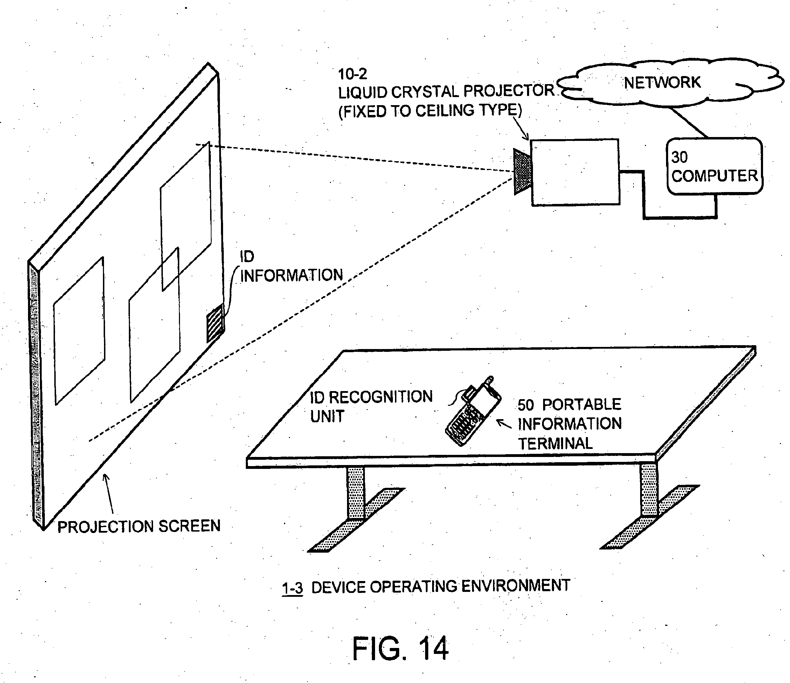

Fig. 14 illustrates a device operating environment 1-3 according to still another embodiment of the present invention. In this device operating environment 1-3, the information processing device 10-2, for example, a liquid crystal projector, used by the user, and the small portable information terminal 50, for example, a cellular telephone or a PDA (Personal Digital Assistant), owned by the user are provided.

In the example shown in Fig. 14, the liquid crystal projector 10-2 possesses ID information, and is also provided with a communication device connected to a network, such as a telephone network, a wireless LAN (Local Area Network), for example, IEEE802.11b, or short-distance wireless data communication, for example, Bluetooth® communication. Alternatively, instead of the liquid crystal projector 10-2 itself, the computer 30 for driving the display of the liquid crystal projector 10-2 may be provided with a communication device. In the device operating environment 1-3 according to this embodiment, the liquid crystal projector 10-2 is a fixed to ceiling type installed indoors out of reach of the user.

The portable information terminal 50 is provided with a communication device connected to a network such as a cellular telephone network, a wireless LAN (Local Area Network), for example, IEEE802.11b, or short-distance wireless data communication, for example, Bluetooth® communication, and also possesses an ID recognition unit for reading the ID information from the liquid crystal projector 10-2. The portable information terminal 50 is also provided with user interfaces, for example, a screen, operation buttons, and input keys, for performing a device operation.

In this embodiment, ID information indicating the network address is assigned to the liquid crystal projector 10-2 or the site (for example, the computer 30 for transferring drawing information to the liquid crystal projector) in which the operation information of the liquid crystal projector 10-2 is stored. This embodiment differs from the embodiment shown in Fig. 12 in that ID information is stored in a place within the reach of the user, for example, in a projection screen rather than in the liquid crystal projector 10-2, which is a fixed to ceiling type installed indoors out of reach of the user. Instead of the projection screen, the ID information may be stored in another place associated with a function implemented by the liquid crystal projector 10-2 which is to be remotely controlled by the portable information terminal 50.

By reading the ID information from the projection screen by using the ID recognition unit provided for the portable information terminal 50, the portable information terminal 50 is able to obtain the network address for accessing the liquid crystal projector 10-2 or the computer 30 storing the operation information of the liquid crystal projector 10-2.

In the device operating environment 1-3 shown in Fig. 14, the user places the portable information terminal 50 in proximity with the ID information of the projection screen. By reading the ID information from the projection screen by using the ID recognition unit, the portable information terminal 50 is able to obtain the method for accessing the liquid crystal projector 10-2 or the computer 30 storing the operation information of the liquid crystal projector 10-2. By using the access method, for example, the network address or a URL, the portable information terminal 50 establishes a network connection with the liquid crystal projector 10-2 or the computer 30 storing the operation information of the liquid crystal projector 10-2 so that they can communicate with each other.

The liquid crystal projector 10-2 or the computer 30 storing the operation information of the liquid crystal projector 10-2 also sends or downloads the operation information suitable for the processing state of the liquid crystal projector 10-2 or the computer 30 to the portable information terminal 50 via a network. This operation information includes user interface information, for example, an operation screen (GUI: Graphical User Interface) suitable for operating the slides of the liquid crystal projector 10-2 by the portable information terminal 50.

As a result, on the display screen of the portable information terminal 50, a GUI screen suitable for operating the liquid crystal projector 10-2, such as that shown in Fig. 13, is presented (described above). The user is then able to input an operation, for example, specifying a slide to be projected on the projection screen, via the GUI screen shown in Fig. 13. An operation command input by the user is sent to the liquid crystal projector 10-2 or the computer 30 for controlling the display of the liquid crystal projector 10-2 via a network. Accordingly, the user is able to remotely control the liquid crystal projector 10-2 efficiently and easily by using desired operation buttons while referring to a menu list displayed on the GUI screen of the portable information terminal 50.

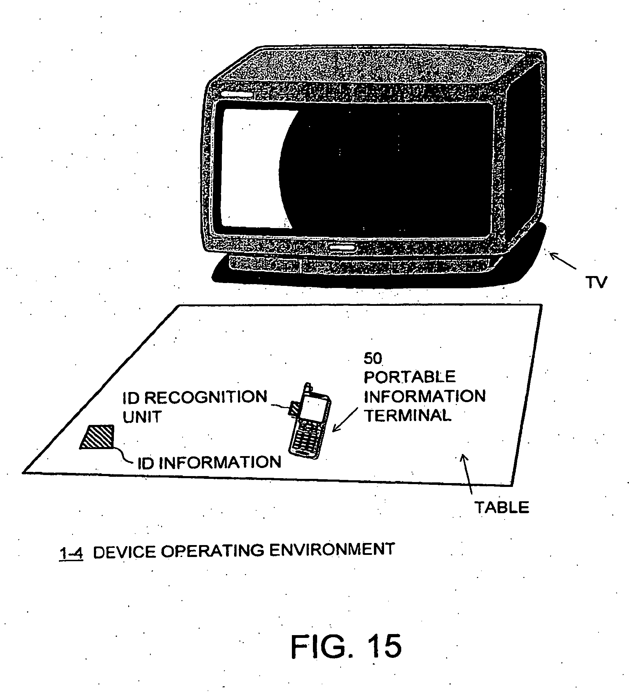

Fig. 15 illustrates a device operating environment 1-4 according to a further embodiment of the present invention. This device operating environment 1-4 assumes a living room in a household, in which a volume-adjustable television receiver (TV) for receiving and displaying broadcast programs according to a predetermined channel tuning operation and a table are provided.

In this embodiment, the television receiver (TV) or the site for providing operation information of the television receiver is provided with a communication device connected to a network such as a telephone network, a wireless LAN (Local Area Network), for example, IEEE802.11b, or short-distance wireless data communication, for example, Bluetooth® communication.

The portable information terminal 50 owned by the user is provided with a communication device connected to a network such as a cellular telephone network, a wireless LAN (Local Area Network), for example, IEEE802.11b, or short-distance wireless data communication, for example, Bluetooth® communication, and also possesses an ID recognition unit for reading the ID information. The portable information terminal 50 is also provided with user interfaces, for example, a screen, operation buttons, and input keys, for performing a device operation.

ID information indicating the network address is assigned to the television receiver itself or the site storing the operation information of the television receiver. The television receiver is away from the user sitting around the table, and the portable information terminal 50 is unable to read the ID information from the television receiver. In this embodiment, therefore, the ID information of the television receiver is attached on the table. The ID information may be provided in another place, other than the table, associated with the audiovisual operation of the television receiver which is to be remotely operated by the portable information terminal 50.

By reading the ID information from the table by using the ID recognition unit provided for the portable information terminal 50, the portable information terminal 50 is able to obtain the method for accessing the television receiver or the site storing the operation information of the television receiver.

In the device operating environment 1-4 shown in Fig. 15, the user places the portable information terminal 50 in proximity with the ID information on the table. By reading the ID information from the table by using the ID recognition unit, the portable information terminal 50 is able to identify the method for accessing the television receiver or the site storing the operation information of the television receiver. By using the access method, for example, the network address or a URL, the portable information terminal 50 establishes a network connection with the television receiver or the site storing the operation information of the television receiver so that they can communicate with each other.

The television receiver or the site storing the operation information of the television receiver also sends or downloads the operation information suitable for the processing state of the television receiver to the portable information terminal 50 via a network. This operation information includes user interface information, for example, an operation screen (GUI: Graphical User Interface) suitable for controlling the channel tuning or adjusting the volume of the television receiver by the portable information terminal 50.

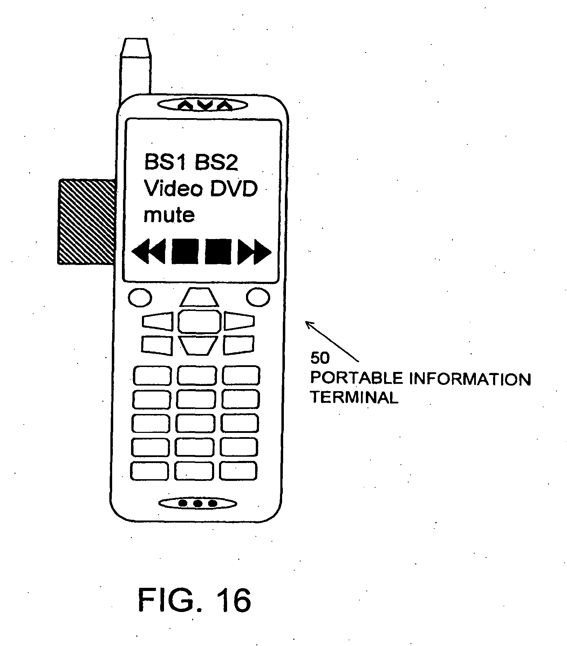

As a result, on the display screen of the portable information terminal 50, a GUI screen suitable for operating the television receiver, such as that shown in Fig. 16, is presented (described above). The user is then able to input an operation, for example, specifying a channel to be received, increasing or decreasing the volume, or playing back video, via the GUI screen shown in Fig. 16. An operation command input by the user is sent to the television receiver via a network. Accordingly, the user is able to remotely control the television receiver efficiently and easily by using desired operation buttons while referring to a menu list displayed on the GUI screen of the portable information terminal 50.

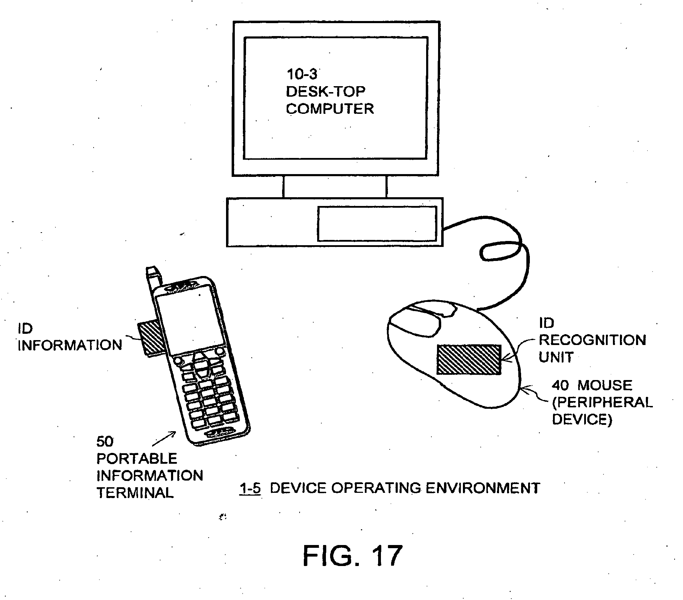

Fig. 17 illustrates a device operating environment 1-5 according to a yet further embodiment of the present invention. In this device operating environment 1-5, as shown in Fig. 17, a fixed information processing device 10-3, for example, a desk-top computer used by the user, a user input device 40, for example, a mouse connected to the desk-top computer 10-3 by cable or cordlessly, and the small portable information terminal 50, for example, a cellular telephone or a PDA (Personal Digital Assistant), owned by the user are provided.

In the example shown in Fig. 17, the portable information terminal 50 is provided with a communication device connected to a network such as a cellular telephone network, a wireless LAN (Local Area Network), for example, IEEE802.11b, or short-distance wireless data communication, for example, Bluetooth® communication, and also possesses ID information. In this embodiment, the ID information possessed by the portable information terminal 50 indicates the method for accessing the portable information terminal 50. As the access method, a network address, for example, an IP address, resource ID information, for example, a URL/URI, a telephone number, and other ID numbers can be used. The portable information terminal 50 is provided with user interfaces, for example, a screen, operation buttons, and input keys for performing a device operation.

The desk-top computer 10-3 is provided with a communication device connected to a network such as a telephone network, a wireless LAN (Local Area Network), for example, IEEE802.11b, or short-distance wireless data communication, for example, Bluetooth® communication.

This embodiment differs from the embodiment shown in Fig. 1 in that the ID recognition unit for reading the ID information from the portable information terminal 50 is provided in a peripheral device, for example, the mouse 40 (or may be a keyboard or a display) rather than the main unit of the computer 10-3.

For example, if the ID recognition unit is provided for a user input/output unit placed near the user, for example, the mouse 40, the ID information can be reliably read from the portable information terminal 50 when the main unit of the computer 10-3 is installed in a place away from the portable information terminal 50, for example, under the desk.

By reading the ID information from the portable information terminal 50 by using the ID recognition unit, the desk-top computer 10-3 is able to obtain the method, for example, the network address, for accessing the portable information terminal 50. The ID recognition unit may be provided for the portable information terminal 50 rather than the mouse 40 of the desk-top computer 10-3, in which case, the portable information terminal 50 reads the ID information, i.e., the network address, of the desk-top computer 10-3 possessed in the mouse 40.

In the device operating environment 1-5 shown in Fig. 17, the user places the portable,information terminal 50 in proximity with the ID recognition unit of the mouse 40 connected to the desk-top computer 10-3. By reading the ID information from the portable information terminal 50 by using the ID recognition unit, the desk-top computer 10-3 is able to obtain the network address for accessing the portable information terminal 50. By reading this network address, the desk-top computer 10-3 establishes a network connection with the portable information terminal 50 so that they can communicate with each other.

The desk-top computer 10-3 also sends operation information suitable for the processing state of the desk-top computer 10-3 to the portable information terminal 50 via a network. This operation information includes user interface information, for example, an operation screen (GUI: Graphical User Interface) suitable for operating the desk-top computer 10-3 by the portable information terminal 50.

If, for example, presentation software is running on the desk-top computer 10-3, GUI screen information for operating the presentation by using the display screen of the portable information terminal 50 is transferred to the portable information terminal 50 via a network. As a result, the user is able to efficiently and easily perform a remote control operation on the presentation being worked on the desk-top computer 10-3 by using the operation screen and the operation buttons of the portable information terminal 50.

In the embodiments shown in Figs. 12, 14, and 15, the ID information, for example, an RF tag, is provided for a machine to be remotely controlled, and the ID recognition unit is provided in the portable information terminal 50 to remotely control the machine. Then, the operation information for performing a remote control operation is made available in an information providing server (for example, the computer 30) on the network. The remotely controlled machine possesses the method for accessing the information providing server as the ID information, and then, the portable information terminal 50 can obtain the access method, for example, a URL/URI, by identifying the ID so as to download the operation information stored in the information providing server into the terminal.

One of the advantages in making the operation information available in an information providing server is to enable a machine manufacturer to centrally manage the operation information concerning the same product in a specific information providing server. For example, when updating the operation information, the manufacturer does not have to distribute new operation information to all the machines or all the users purchased the machines.

When comparing the ID information with the ID recognition unit, for example, an RF tag with an RF tag reader, the structure of the ID information is simpler than that of the ID recognition unit. Accordingly, unlike the above-described embodiments, it is preferable that the ID information be provided in the portable information terminal 50 and the ID recognition unit be provided for a machine to be controlled. In this case, it is also preferable that operation information be made available in an information providing server.

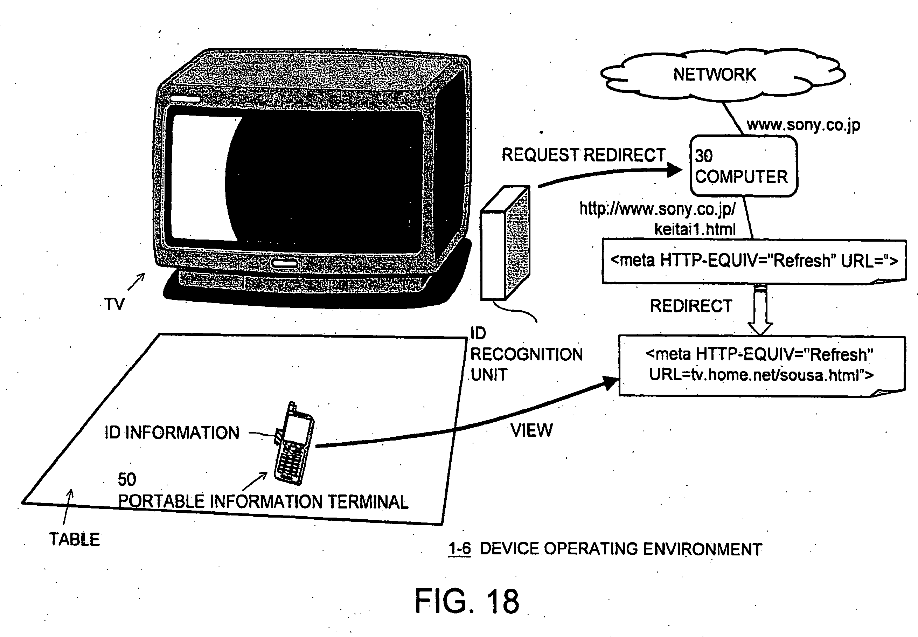

Accordingly, a device operating environment 1-6 shown in Fig. 18 is now considered. In this device operating environment 1-6, a TV receiver to be remotely controlled, and the portable information terminal 50 for remotely controlling the TV receiver by obtaining operation information are provided. The portable information terminal 50 possesses ID information, and the ID recognition unit is disposed at the top of the main unit (or near the main unit) of the TV receiver.

The portable information terminal 50 has an information storage location of its own in the information providing server 30, for example, in the computer 30, and possesses the method for accessing the storage location as the ID information. As the access method, for example, a resource identifier written in the format of a URL or URI can be used. By reading the ID information, the ID recognition unit is able to identify the method for accessing the information storage location so that the operation information can be sent and received via the storage location. The process for providing the operation information is described below more specifically.

The user places the portable information terminal 50 in proximity with the ID recognition unit installed near the TV receiver to be operated by the user so as to allow the ID recognition unit to identify the ID information.

The portable information terminal 50 stores the method for accessing the information storage location unique to the portable information terminal 50 as the ID information. The access method can be written in the format of a resource identifier, for example, a URL or URI, and it is now assumed that the resource identifier is, for example, "http://www.sony.co:jp/keitail.html".

HTML documents are stored in the URL unique to the portable information terminal 50, and in practice, the URL indicates redirection to another URL (<meta HTTP-EQUIV="Refresh"URL=">).

Redirect is a download procedure for rewriting a resource identifier, for example, a URL, in a server and for returning a target URL. In this example, redirect is implemented by inserting meta-tag into the <HEAD> tag of the HTML file. Alternatively, redirect can be implemented by using CGI (Common Gateway Interface) or script.

The TV receiver also has a WWW (World Wide Web) page indicating the operation information for remotely controlling the receiver. It is now assumed that such a URL is "http://tv.home.net/sousa.html". The machine-operating WWW page is centrally managed by, for example, the machine manufacturer.

Upon obtaining the ID information, the TV receiver sends a request to the information providing server 30 (www.sony.co.jp) to redirect the information storage location (http://www.sony.co.jp/keitail.html) represented by the access method to the operation-information storage location (http://tv.home.net/sousa.html) of the TV receiver.

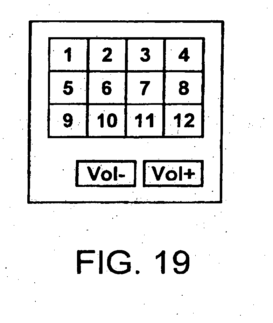

Then, the portable information terminal 50 connects to the URL (in this example,
http://www.sony:co..jp/keitail.html) unique to the terminal. In practice, however, the portable information terminal 50 connects to the redirected location
(,http://tv.home.net/sousa.html). As a result, the portable information terminal 50 can view the operation information page (see Fig. 19) of the TV receiver so that it can remotely control the TV receiver by operating the anchor through this operation information page.

The operation information of the TV receiver made available in the WWW page (http://tv.home.net/sousa.html). is written by using, for example, Java Applet, and can be downloaded and executed by the portable information terminal 50. Accordingly, it is not necessary to distribute or install the operation information to or in the portable information terminal 50 in advance.

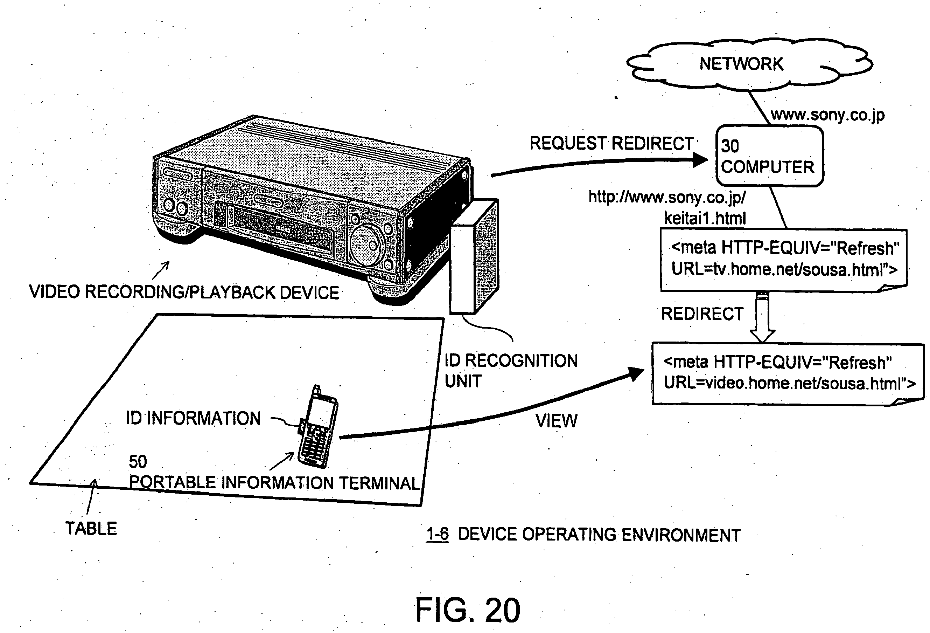

The ID information of the portable information terminal 50 can also be identified by another device (for example, a video recording/playback device) (see Fig. 20). It is now assumed that the video recording/playback device also possesses a unique WWW page
(http://video.home.net/sousa.html).

The video recording/playback device sends a request to the information providing server 30 (www.sony.co.jp) to redirect the identified ID
(http://www.sony.co.jp/keitail.html) to the WWW page
(http://video.home.net/sousa.html) unique to the video recording/playback device.

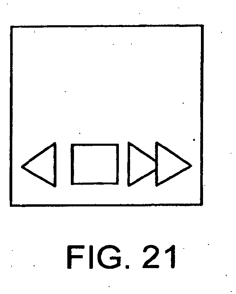

Then, when the portable information terminal 50 connects to the unique URL (in this example, http://www.sony.co.jp/keitail.html), it connects to the redirected URL http://video.home.net/sousa.html. As a result, the portable information terminal 50 can view the operation information page (see Fig. 21) of the video recording/playback device so that it can remotely control the video recording/playback device by operating the anchor through this operation information page. The operation information is written by using, for example, Java Applet, and can be downloaded and executed by the portable information terminal 50. Accordingly, it is not necessary to distribute or install the operation information to or in the portable information terminal 50 in advance.

As is seen from the above description, the portable information terminal 50 is able to connect to the URL (http://www.sony.co.jp/keitail.html) unique to the terminal by performing a simple operation (for example, pressing a specific button such as "start Web browser"). As a result, the user of the portable information terminal 50 is able to connect to the WWW page indicating the operation information by a simple operation such as "identify ID" without the need to manually input the WWW address of each device to be operated. The remote control operation on the devices can be performed based on the anchor operation on the browser screen.

In this embodiment, apart from the means for connecting to the WWW (network interface or Web browser), it is only necessary that an ID tag be attached to the portable information terminal 50. That is, to implement the above-described operation, it is only necessary to attach an ID tag to known hardware, for example, a cellular telephone.

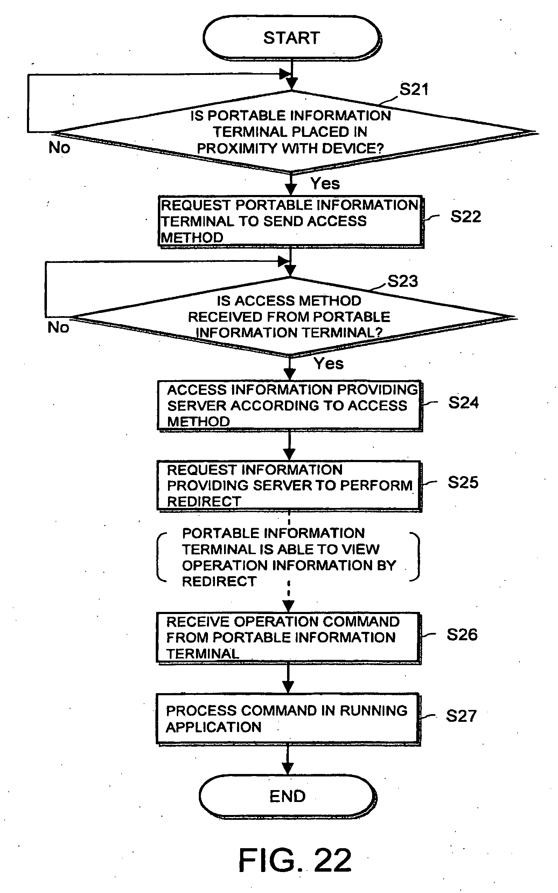

Fig. 22 is a flowchart illustrating the operation performed by a device to be remotely controlled under the device operating environment 1-6 according to this embodiment.

When the portable information terminal 50 owned by the user is placed in proximity with a device to be remotely controlled (step S21), the device requests the portable information terminal 50 to send a method for accessing the information storage location of the portable information terminal 50 (step S22).

The portable information terminal 50 possesses the access method indicated in a format, for example, a URL or URI, as the ID information. In practice, the transmission request of the access information is made by reading the ID information by the ID recognition unit 18. The ID recognition method is not particularly restricted, and a non-contact recognition method, for example, the above-described RF-ID, touch net, barcode, two-dimensional barcode, cybercode, or infrared communication, can be used.

Upon receiving the method for accessing the information storage location unique to the portable information terminal. 50 by identifying the ID information 16 (step S23), the device accesses the predetermined information providing server 30 according to this access method (step S24).

The device to be remotely controlled makes the operation information of the device available on a network. The device requests this information providing server to redirect the information storage location indicated by the access method to the storage location storing the operation information content of the device (step S25). Redirect is implemented by, for example, meta-tag, CGI, or script (described above).

As a result, by connecting to the URL unique to the portable information terminal 50, the portable information terminal 50 is able to view the page in which the operation information of the remotely controlled device is made available. The user of the portable information terminal 50 is able to remotely control the device through this operation information page. The operation information is written by using, for example, Java Applet, and can be downloaded by the portable information terminal 50.

The information storage location assigned to the portable information terminal 50 is a private information space, and thus, it can be considered that the information indicating the method for accessing such an information storage location should be handled with high security.

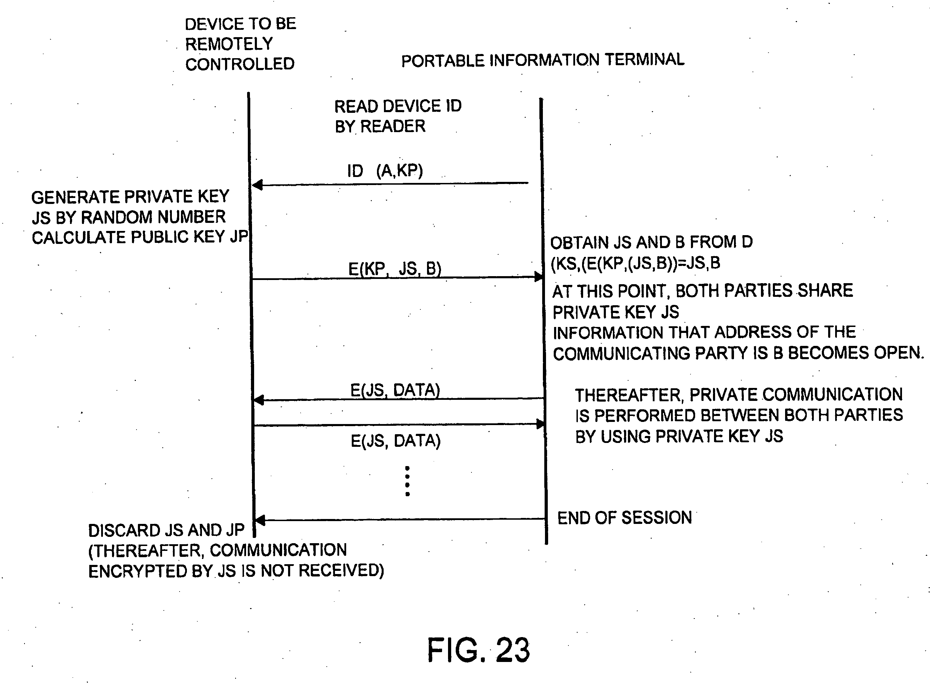

Fig. 23 illustrates a communication procedure for reading ID information by taking the security into consideration. This communication procedure is applicable to, for example, step S22 of the flowchart of Fig. 22.

In response to a request to send ID information from the remotely controlled device, the portable information terminal 50 sends ID information consisting of a set of address information A of the terminal and a public key AP of the terminal.

The ID information of such a format is open information. All the data flowing in the communication channel are also assumed as open information.

Meanwhile, the device generates a private key JS as a random number and generates a public key JP corresponding to the private key JS. Then, the device encrypts a set of the private key JS and address information B of the device with the public key KP of the terminal 50, and sends this ciphertext to the terminal 50.

The portable information terminal 50 decrypts the received ciphertext with a private key KS of the terminal 50 so as to obtain the private key JS and the address information B. At this point, both the portable information terminal 50 and the device share the same private key JS, and the portable information terminal 50 knows the address information B of the communicating party.

Thereafter, private communication can be performed between the portable information terminal 50 and the device by using JS as the private key. By using this private communication, the portable information terminal 50 is able to securely deliver private data, for example, a URL indicating the information storage location unique to the portable information terminal 50, to the communicating party. Then, the operation information of the device can be provided via this URL.

Upon completion of session after performing communication between both the communicating parties, the private key JS and the public key JP generated for private communication are discarded. Thereafter, communication encrypted by the private key JS should not be received because the possibility of such communication being unauthorized is very high.

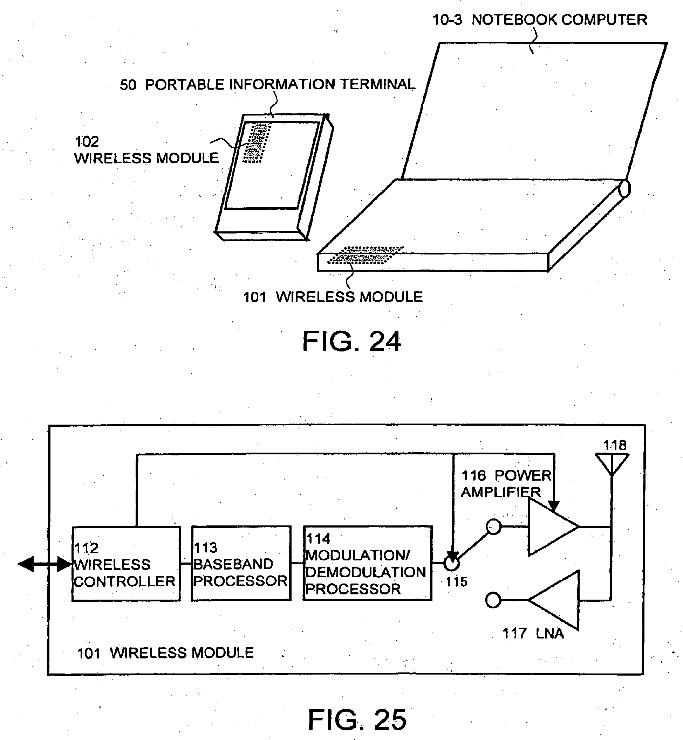

Fig. 24 illustrates a device operating environment 1-7 according to a further embodiment of the present invention. As shown in Fig. 24, in this device operating environment 1-7, the information processing device 10-3, for example, a notebook computer, used by the user and the small portable information terminal 50, for example, a PDA, owned by the user are provided.

In the example shown in Fig. 24, modules 101 and 102 using short-distance wireless communication, for example, Bluetooth® communication, are provided in the notebook computer 10-3 and the portable information terminal 50, respectively. In the above-described embodiments, an RF tag is used for storing and reading the ID information. In the embodiment shown in Fig. 24, however, the devices can be connected to each other by Bluetooth® communication, without using an RF tag. More specifically, in a first step, transmission power is decreased, and then, two devices are placed close to each other so as to specify the communicating devices, thereby establishing connection between the two devices. In a second step, after establishing connection, power is increased to the original level, and then, required information is sent. In a third step, the required information is obtained from a network so as to perform a remote control operation.

Fig. 25 schematically illustrates the functional configuration of the wireless module 101 (102) used for performing communication between the devices, As shown in Fig. 25, the wireless module includes a wireless controller 112, a baseband processor 113, a modulation/demodulation processor 114, a switch 115, a power amplifier 116, an LNA 117, and an antenna 118.

A transmission signal passes through the wireless controller 112, the baseband processor 113, and the modulation/demodulation processor 114, and is then transmitted via the power amplifier 116. The gain of the power amplifier 116 can be controlled by the wireless controller 112, and the transmission output can be controlled outside the wireless module 101 via the wireless controller 112. Instead of controlling the output by the power amplifier 116, the amplitude of the output signal may be changed in the baseband processor 113 or the modulation/demodulation processor 114.

In the example shown in Fig. 25, the radio-wave coverage distance can be changed by controlling the output power. As a result, the area within which communication can be made can be controlled. Thus, wireless communication can be performed by varying the communication area, for example, short-distance communication that restricts the communication area to be a short distance or relatively long-distance communication using the maximum output.

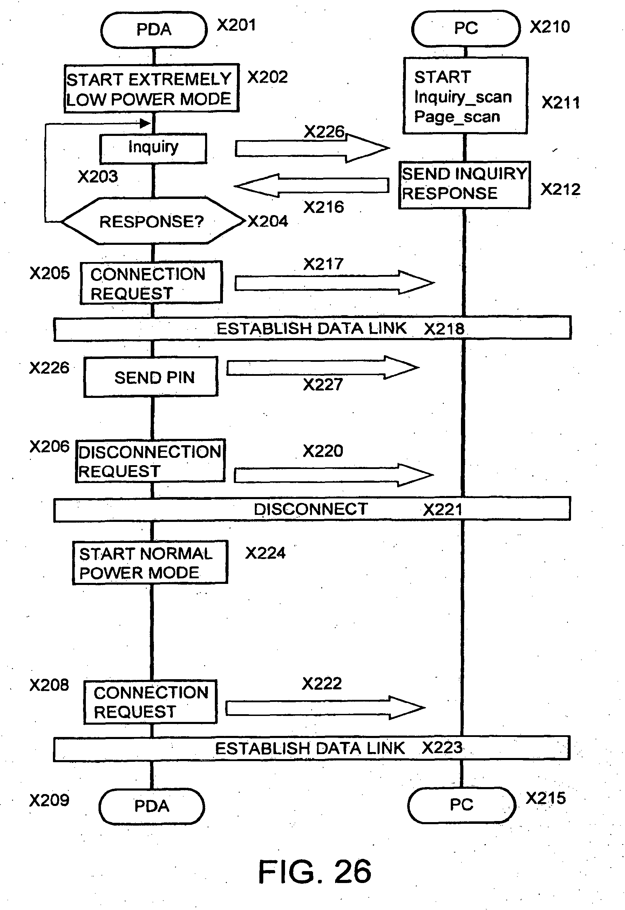

Fig. 26 illustrates a connection procedure sequence when a wireless communication function between the devices is implemented by using Bluetooth® communication in the device operating environment 10-7 according to this embodiment.

A PDA (X201) periodically makes inquiries in an extremely low power mode X202 (X203), and a PC constantly performs inquiry scanning (X211).

Since the PDA makes inquires with an extremely low output, the radio waves do not reach the PC under normal conditions. If the distance between the PDA and the PC becomes shorter by the user or for some reasons, the PC detects an inquiry signal sent from the PDA, and returns a response signal, which is referred to as an "FHS packet" (X212, X216) .

The FHS packet includes information required for making a connection request, for example, the Bluetooth device address of the PC (device address uniquely assigned to each Bluetooth module).

Upon receiving the FHS packet from the PC, the PDA makes a connection request by specifying the Bluetooth device address of the PC while outputting an extremely low output (X205, X217), and a data link is established between the PDA and the PC (X218).

Then, for ensuring the security, the PDA sends a character string, which is referred to as "PIN code", for device authentication, while maintaining the extremely low power mode (X226, X227).

To further ensure the security, the use of a public key cryptosystem can be considered, and more specifically, the PC, which is to receive the PIN code, may send a public key to the PDA, and the PDA encrypts the PIN code with the public key and then sends the encrypted PIN code to the PC.

The PDA disconnects the link (step X206, X220, X221). However, the subsequent procedure can be continued even if the link is not disconnected. It is not, therefore, essential that the link be disconnected. Thereafter, the PDA shifts from the extremely small power mode to the normal power mode (X224).

### Supplement

The present invention has been described in detail with reference to what are presently considered to be the specific embodiments. However, it is apparent that various modifications and equivalent arrangements can be made on the embodiments by those who skilled in the art without departing from the spirit and scope of the appended claims. In short, the invention is disclosed by way of examples only, and should not be interpreted as restrictive. The scope of the invention is to be determined by the appended claims.

### [Industrial Applicability]

According to the present invention, there can be provided a remote control system and a remote control method, a device for performing a remote control operation and a control method therefor, a device operable by remote control operation and a control method therefor, and a storage medium that exhibit excellent characteristics by allowing one device to control the operation of another device under a suitable operating environment.

According to the present invention, there is also provided a remote control system and a remote control method, a device for performing a remote control operation and a control method therefor, a device operable by remote control operation and a control method therefor, and a storage medium that exhibit excellent characteristics by performing a remote control operation under a suitable operating environment constructed by using operation information for allowing one device to perform a remote control operation on another device.

According to the present invention, there is also provided a remote control system and a remote control method, a device for performing a remote control operation and a control method therefor, a device operable by remote control operation and a control method therefor, and a storage medium that exhibit excellent characteristics by performing a remote control operation under a suitable operating environment by allowing one device to dynamically obtain operation information concerning another device.

## Claims

1. A remote control system (1) adapted to allow a first device (50) to control an operation of a second device (10), the system comprising:
ID information (ID INFORMATION; 61) including a network address of the first device or the second device, or indicating a method for accessing an information storage location specially provided for the first device;
an ID recognition unit (ID RECOGNITION UNIT; 18) adapted to obtain the ID information allowing the first device to be accessed by reading the ID information;
network connection means (17, 62) adapted to establish network connection between the devices;
operation information providing means adapted to transfer operation information for remotely controlling the second device to the first device by using the obtained ID information; and
remote control means (56) adapted to allow the first device to remotely control the second device by using the operation information; wherein
the ID information or the ID recognition unit is provided in a peripheral device (40) connected to the second device to be remotely controlled by the first device; wherein:
the operation information is made available by a manufacturer of the second device at an information providing server on a network, the information providing server being a specific information providing server centrally managed by the manufacturer of the second device, and the ID information indicates one of a Uniform Resource Locator, URL, or Uniform Resource Identifier, URI, for accessing the information providing server for allowing the first device to download the operation information from the information providing server.

2. A remote control system according to claim 1, wherein:
the ID recognition unit is adapted to read the ID information according to any one of formats including an RF-ID, touch net, a barcode, a two-dimensional barcode, a cybercode, infrared communication, and Bluetooth communication in an extremely low power mode.

3. A remote control system according to claim 1, wherein:
the network means is adapted to establish network connection between the devices according to at least one of a wireless or wired Local Area Network, LAN, Bluetooth communication, a telephone network, and the Internet.

4. A remote control system according to any one of claims 1 to 3, wherein the operation information is user interface information indicating an operation screen or an operation method suitable for operating the second device by the first device.

5. A remote control system according to any one of claims 1 to 3, wherein the first device is a portable information terminal including a cellular telephone or a Personal Digital Assistant, PDA, owned by a user.

6. A remote control system according to any one of claims 1 to 3, wherein the second device is a relatively large device used in an environment in which the device is installed, including a notebook computer, a desk-top computer, a liquid crystal projector, or a television receiver.

7. A remote control system according to any one of claims 1 to 3, wherein the ID information or the ID recognition associated unit is installed in a place which is associated with a function implemented by the second device to be remotely controlled by the first device.

8. A remote control method that allows a first device connected to a network to control an operation of a second device, comprising:
an ID recognition step (S2, S13) of reading ID information including a network address of the first device or the second device, or indicating a method for accessing an information storage location specially provided for the first device so as to obtain the ID information allowing the first device to be accessed;
a network connection step (S5, S15) of establishing network connection between the devices;
an operation information providing step (S6, S16) of transferring operation information for remotely controlling the second device to the first device by using the ID information obtained by the ID recognition step; and
a remote control step (S7, S8, S17, S18) of allowing the first device to remotely control the second device by using the operation information; wherein:
the ID information is provided in a peripheral device connected to the second device to be remotely controlled by the first device; wherein:
the operation information is made available by a manufacturer of the second device at an information providing server on a network, the information providing server being a specific information providing server centrally managed by the manufacturer of the second device, and the ID information indicates one of a Uniform Resource Locator, URL, or Uniform Resource Identifier, URI, for accessing the information providing server for allowing the first device to download the operation information from the information providing server.

9. A remote control method according to claim 8, wherein:
the ID recognition step reads the ID information according to any one of formats including an RF-ID, touch net, a barcode, a two-dimensional barcode, a cybercode, infrared communication, and Bluetooth communication in an extremely low power mode.

10. A remote control method according to claim 8, wherein:
the network connection step establishes network connection between the devices according to at least one of a wireless or wired Local Area Network, LAN, Bluetooth communication, a telephone network, and the Internet.

11. A remote control method according to any one of claims 8 to 10, wherein the operation information is user interface information indicating an operation screen or an operation method suitable for operating the second device by the first device.

12. A remote control method according to any one of claims 8 to 10, wherein the first device is a portable information terminal including a cellular telephone or a Personal Digital Assistant, PDA, owned by a user.

13. A remote control method according to any one of claims 8 to 10, wherein the second device is a relatively large device used in an environment in which the device is installed, including a notebook computer, a desk-top computer, a liquid crystal projector, or a television receiver.

14. A remote control method according to any one of claims 8 to 10, wherein the ID information is provided in a place which is associated with a function implemented by the second device to be remotely controlled by the first device.

15. A device (50) for remotely controlling a first device (10), comprising:
ID recognition means (ID RECOGNITION UNIT) adapted to read ID information including a network address of the first device or indicating a method for accessing an information storage location specially provided for the device (50);
network connection means (62) adapted to establish network connection;
operation information obtaining means adapted to obtain operation information for remotely controlling the first device by using the ID information read by the ID recognition means; and
remote control means(56) adapted to remotely control the first device via a network by using the obtained operation information; wherein:
the ID recognition means is operable to read the ID information from a peripheral device connected to the first device to be remotely controlled; and
the ID information is provided in the peripheral device; wherein:
the operation information is made available by a manufacturer of the first device at an information providing server on the network, the information providing server being a specific information providing server centrally managed by the manufacturer of the first device, and the ID information indicates one of a Uniform Resource Locator, URL, or Uniform Resource Identifier, URI, for accessing the information providing server for downloading the operation information from the information providing server.

16. A device for remotely controlling a first device according to claim 15, wherein the operation information is user interface information indicating an operation screen or an operation method suitable for operating the first device by the device.

17. A device for remotely controlling a first device according to claim 15, wherein the device is a portable information terminal including a cellular telephone or a Personal Digital Assistant, PDA, owned by a user.

18. A device for remotely controlling a first device according to claim 15, wherein the ID information is provided in a place which is associated with a function implemented by the first device to be remotely controlled.

19. A device for remotely controlling a first device according to claim 15, wherein the ID information is represented by any one of formats including RF-ID, touch net, barcode, two-dimensional barcode, cybercode, infrared communication, and Bluetooth® communication in an extremely low power mode.

20. A control method for a device (50) remotely controlling a first device (10) comprising:
an ID recognition step of reading ID information including a network address of the first device or indicating a method for accessing an information storage location specially provided for the device (50);
a network connection step of establishing network connection;
an operation information obtaining step of obtaining operation information for remotely controlling the first device by using the ID information read by the ID recognition step;
a remote control step of remotely controlling the first device via a network by using the obtained operation information wherein:
the ID recognition step comprises reading the ID information from a peripheral device connected to the first device to be remotely controlled, the ID information being provided in the peripheral device; wherein
the operation information is made available by a manufacturer of the first device at an information providing server on the network, the information providing server being a specific information providing server centrally managed by the manufacturer of the first device, and the ID information indicates one of a Uniform Resource Locator, URL, or Uniform Resource Identifier, URI, for accessing the information providing server for downloading the operation information from the information providing server.

21. A control method for a device remotely controlling a first device according to claim 20, wherein the operation information is user interface information indicating an operation screen or an operation method suitable for operating the first device by the device.

22. A control method for a device remotely controlling a first device according to claim 20, wherein the device which is connectable to a network is a portable information terminal including a cellular telephone or a Personal Digital Assistant, PDA, owned by a user.

23. A control method for a device remotely controlling a first device according to claim 20, wherein the ID information is provided in a place which is associated with a function implemented by the first device to be remotely controlled.

24. A control method for a device remotely controlling a first device according to claim 23, wherein:
the ID information includes a method for accessing an information storage location specially provided for the device; and
the operation information obtaining step obtains the operation information, written into the information storage location, for remotely controlling the first device.

25. A control method for a device remotely controlling a first device according to claim 20, wherein the ID information is represented by any one of formats including an RF-ID, touch net, a barcode, a two-dimensional barcode, a cybercode, infrared communication, and Bluetooth communication in an extremely low power mode.

26. A system comprising a device (10) for being remotely controlled by a first device (50) and a peripheral device connected to the device for being remotely controlled, the system comprising:
ID information indicating a network address of the device or indicating an access method for exchanging information, the ID information being provided in the peripheral device (40) connected to the device;
network connection means adapted to establish network connection;
operation information providing means adapted to provide operation information for remotely controlling the device to the first device; and
operation means adapted to be operated by being remotely controlled by the first device; wherein
the operation information is made available by a manufacturer of the device at an information providing server on a network, the information providing server being a specific information providing server centrally managed by the manufacturer of the device, and the ID information indicates one of a Uniform Resource Locator, URL, or Uniform Resource Identifier, URI, for accessing the information providing server for allowing the first device to download the operation information from the information providing server.

27. A system according to claim 26, wherein the operation information is user interface information indicating an operation screen or an operation method operating the device by the first device.

28. A system according to claim 26, wherein the first device is a portable information terminal including a cellular telephone or a Personal Digital Assistant, PDA, owned by a user.

29. A system according to claim 26, wherein the device is a relatively large device used in an environment in which the device is installed, including a notebook computer, a desk-top computer, a liquid crystal projector, or a television receiver.

30. A system according to claim 26, wherein the ID information is represented by any one of formats including an RF-ID, touch net, cybercode, a barcode, a two-dimensional barcode, a infrared communication, and Bluetooth communication in an extremely low power mode.

31. A control method for a device (10) to be remotely controlled by a first device (50), comprising:
a step of allowing the first device to read ID information indicating a network address of the device or indicating an access method for exchanging information from a peripheral device (40) connected to the device;
a network connection step of establishing network connection;
an operation information providing step of providing operation information for remotely controlling the device to the first device; and
an operation step of being operated by being remotely controlled by the first device; wherein
the operation information is made available by a manufacturer of the device at an information providing server on a network, the information providing server being a specific information providing server centrally managed by the manufacturer of the device and the ID information indicates one of a Uniform Resource Locator, URL, or Uniform Resource Identifier, URI, for accessing the information providing server for allowing the first device to download the operation information from the information providing server.

32. A control method for a device to be remotely controlled by a first device according to claim 31, wherein the operation information is user interface information indicating an operation screen or an operation method suitable for operating the device by the first device.

33. A control method for a device to be remotely controlled by a first device according to claim 31, wherein the first device is a portable information terminal including a cellular telephone or a Personal Digital Assistant, PDA, owned by a user.

34. A control method for a device to be remotely controlled by a first device according to claim 31, wherein the device is a relatively large device used in an environment in which the device is installed, including a notebook computer, a desk-top computer, a liquid crystal projector, or a television receiver.

35. A control method for a device to be remotely controlled by a first device according to claim 31, wherein the ID information is represented by any one of formats including an RF-ID, touch net, a barcode, a two- dimensional barcode, a cybercode, infrared communication, and Bluetooth communication in an extremely low power mode.

36. A storage medium in which computer software for allowing a device (50) for remotely controlling a first device (10) to be controlled in a computer system is physically stored in a computer readable format, said computer software comprising:
an ID recognition step of reading ID information indicating a network address of the first device or indicating an access method for exchanging information;
a network connection step of establishing network connection;
an operation information obtaining step of obtaining operation information for remotely controlling the first device by using the ID information read by the ID recognition step; and
a remote control step of remotely controlling the first device via a network by using the obtained operation information; wherein;
the ID recognition step comprises reading the ID information from a peripheral device connected to the first device to be remotely controlled, the ID information being provided in the peripheral device; wherein:
the operation information is made available by a manufacturer of the first device at an information providing server on the network, the information providing server being a specific information providing server centrally managed by the manufacturer of the first device and the ID information indicates one of a Uniform Resource Locator, URL, or Uniform Resource Identifier, URI, for accessing the information providing server for downloading the operation information from the information providing server.

37. A storage medium in which computer software for allowing a device (10) for being remotely controlled by a first device (50) to be controlled in a computer system is physically stored in a computer readable format, said computer software comprising:
a step of allowing the first device to read ID information indicating a network address of the device or indicating an access method for exchanging information from a peripheral device (40) connected to the device;
a network connection step of establishing network connection;
an operation information providing step of providing operation information for remotely controlling the device to the first device; and
an operation step of being operated by being remotely controlled by the first device; wherein
the operation information is made available by a manufacturer of the device at an information providing server on a network, the information providing server being a specific information providing server centrally managed by the manufacturer of the device, and the ID information indicates one of a Uniform Resource Locator, URL, or Uniform Resource Identifier, URI, for accessing the information providing server for allowing the first device to download the operation information from the information providing server.

## Patentansprüche

1. Fernsteuersystem (1), angepasst, um einer ersten Vorrichtung (50) zu erlauben, einen Betrieb einer zweiten Vorrichtung (10) zu steuern, wobei das System umfasst:
ID-Informationen (ID INFORMATION; 61), die eine Netzwerkadresse der ersten Vorrichtung oder der zweiten Vorrichtung einschließen oder ein Verfahren zum Zugreifen auf einen Informationsspeicherort anzeigen, der für die erste Vorrichtung speziell bereitgestellt wird;
eine ID-Erkennungseinheit (ID RECOGNITION UNIT; 18), angepasst, um die ID-Informationen zu erhalten, die der ersten Vorrichtung erlauben, durch Lesen der ID-Informationen zugreifbar zu werden;
Netzwerkverbindungsmittel (17, 62), angepasst, um Netzwerkverbindung zwischen den Vorrichtungen einzurichten;
Bereitststellungsmittel für Betriebsinformationen, angepasst, um Betriebsinformationen zum Fernsteuern der zweiten Vorrichtung an die erste Vorrichtung durch Verwenden der erhaltenen ID-Informationen zu übergeben; und
Fernsteuermittel (56), angepasst, um der ersten Vorrichtung zu erlauben, die zweite Vorrichtung durch Verwenden der Betriebsinformationen fernzusteuern; wobei
die ID-Informationen oder die ID-Erkennungseinheit in einer mit der zweiten Vorrichtung verbundenen Peripherievorrichtung (40) bereitgestellt werden, um durch die erste Vorrichtung ferngesteuert zu werden; wobei:
die Betriebsinformationen durch einen Hersteller der zweiten Vorrichtung bei einem Informationsbereitstellungsserver auf einem Netzwerk verfügbar gemacht werden, wobei der Informationsbereitstellungsserver ein durch den Hersteller der zweiten Vorrichtung zentral verwalteter spezieller Informationsbereitstellungsserver ist, und die ID-Informationen einen Uniform Resource Locator, URL, oder Uniform Resource Identifier, URI, zum Zugreifen auf den Informationsbereitstellungsserver anzeigen, um der ersten Vorrichtung zu erlauben, die Betriebsinformationen von dem Informationsbereitstellungsserver herunterzuladen.

2. Fernsteuersystem nach Anspruch 1, wobei:
die ID-Erkennungseinheit angepasst wird, die ID-Informationen gemäß einem Format zu lesen, einschließlich einer RFID, Touch Net, eines Barcodes, eines zweidimensionalen Barcodes, eines Cybercodes, Infrarotübertragung und Bluetooth-Verbindung in einem extremen Low-Power-Modus.

3. Fernsteuersystem nach Anspruch 1, wobei:
das Netzwerkmittel angepasst wird, um Netzwerkverbindung zwischen den Vorrichtungen gemäß einer drahtlosen oder drahtgebundenen lokalen Netzwerk(Local Area Network, LAN)-Bluetooth-Verbindung und/oder einem Telefonnetzwerk und/oder dem Internet einzurichten.

4. Fernsteuersystem nach einem der Ansprüche 1 bis 3, wobei die Betriebsinformationen Anwenderschnittstelleninformationen sind, die einen Betriebsbildschirm oder ein Betriebsverfahren anzeigen, die zum Betreiben der zweiten Vorrichtung durch die erste Vorrichtung geeignet sind.

5. Fernsteuersystem nach einem der Ansprüche 1 bis 3, wobei die erste Vorrichtung ein tragbares Informationsterminal einschließlich eines Mobiltelefons oder eines Personal Digital Assistant, PDA, ist, das/der einem Benutzer gehört.

6. Fernsteuersystem nach einem der Ansprüche 1 bis 3, wobei die zweite Vorrichtung eine relativ große Vorrichtung ist, die in einer Umgebung verwendet wird, in der die Vorrichtung installiert wird, einschließlich eines Notebook-Computers, eines Desktop-Computers, eines LCD-Projektors oder eines Fernsehempfängers.

7. Fernsteuersystem nach einem der Ansprüche 1 bis 3, wobei die ID-Informationen oder die der ID-Erkennung zugehörige Einheit an einem Ort installiert werden/wird, der mit einer durch die zweite Vorrichtung umgesetzten Funktion hat, um durch die erste Vorrichtung ferngesteuert zu werden.

8. Fernsteuerverfahren, das einer mit einem Netzwerk verbundenen ersten Vorrichtung erlaubt, einen Betrieb einer zweiten Vorrichtung zu steuern, umfassend:
einen ID-Erkennungsschritt (S2, S13) zum Lesen von ID-Informationen, die eine Netzwerkadresse der ersten Vorrichtung oder der zweiten Vorrichtung einschließen oder ein Verfahren zum Zugreifen auf einen Informationsspeicherort anzeigen, der für die erste Vorrichtung speziell bereitgestellt wird, um die ID-Informationen zu erhalten, die der ersten Vorrichtung erlauben, zugreifbar zu werden;
einen Netzwerkverbindungsschritt (S5, S15) zum Einrichten von Netzwerkverbindung zwischen den Vorrichtungen;
einen Bereitstellungsschritt für Betriebsinformationen (S6, S16) zum Übergeben von Betriebsinformationen zum Fernsteuern der zweiten Vorrichtung an die erste Vorrichtung durch Verwenden der durch den ID-Erkennungsschritt erhaltenen ID-Informationen; und
einen Fernsteuerschritt (S7, S8, S17, S18), der der ersten Vorrichtung erlaubt, die zweite Vorrichtung durch Verwenden der Betriebsinformationen fernzusteuern; wobei:
die ID-Informationen in einer mit der zweiten Vorrichtung verbundenen Peripherievorrichtung bereitgestellt werden, um durch die erste Vorrichtung ferngesteuert zu werden; wobei:
die Betriebsinformationen durch einen Hersteller der zweiten Vorrichtung bei einem Informationsbereitstellungsserver auf einem Netzwerk verfügbar gemacht werden, wobei der Informationsbereitstellungsserver ein durch den Hersteller der zweiten Vorrichtung zentral verwalteter spezieller Informationsbereitstellungsserver ist, und die ID-Informationen einen Uniform Resource Locator, URL, oder Uniform Resource Identifier, URI, zum Zugreifen auf den Informationsbereitstellungsserver anzeigen, um der ersten Vorrichtung zu erlauben, die Betriebsinformationen von dem Informationsbereitstellungsserver herunterzuladen.

9. Fernsteuerverfahren nach Anspruch 8, wobei:
der ID-Erkennungsschritt die ID-Informationen gemäß einem Format, einschließlich einer RFID, Touch Net, eines Barcodes, eines zweidimensionalen Barcodes, eines Cybercodes, Infrarotübertragung und Bluetooth-Verbindung in einem extremen Low-Power-Modus, liest.

10. Fernsteuerverfahren nach Anspruch 8, wobei:
der Netzwerkverbindungsschritt Netzwerkverbindung zwischen den Vorrichtungen gemäß
einer drahtlosen oder drahtgebundenen lokalen Netzwerk(Local Area Network, LAN)-Bluetooth-Verbindung und/oder einem Telefonnetzwerk und/oder dem Internet einrichtet.

11. Fernsteuerverfahren nach einem der Ansprüche 8 bis 10, wobei die Betriebsinformationen Anwenderschnittstelleninformationen sind, die einen Betriebsbildschirm oder ein Betriebsverfahren anzeigen, die zum Betreiben der zweiten Vorrichtung durch die erste Vorrichtung geeignet sind.

12. Fernsteuerverfahren nach einem der Ansprüche 8 bis 10, wobei die erste Vorrichtung ein tragbares Informationsterminal einschließlich eines Mobiltelefons oder eines Personal Digital Assistant, PDA, ist, das/der einem Benutzer gehört.

13. Fernsteuerverfahren nach einem der Ansprüche 8 bis 10, wobei die zweite Vorrichtung eine relativ große Vorrichtung ist, die in einer Umgebung verwendet wird, in der die Vorrichtung installiert wird, einschließlich eines Notebook-Computers, eines Desktop-Computers, eines LCD-Projektors oder eines Fernsehempfängers.

14. Fernsteuerverfahren nach einem der Ansprüche 8 bis 10, wobei die ID-Informationen an einem Ort bereitgestellt werden, der einer durch die zweite Vorrichtung umgesetzten Funktion zugeordnet wird, um durch die erste Vorrichtung ferngesteuert zu werden.

15. Vorrichtung (50) zum Fernsteuern einer ersten Vorrichtung (10), umfassend:
ID- Erkennungsmittel (ID RECOGNITION UNIT), angepasst, um ID-Informationen zu lesen, die eine Netzwerkadresse der erste Vorrichtung einschließen oder ein Verfahren zum Zugreifen auf einen Informationsspeicherort anzeigen, der für die Vorrichtung (50) speziell bereitstellt wird; Netzwerkverbindungsmittel (62), angepasst, um Netzwerkverbindung einzurichten;
Erhaltungsmittel für Betriebsinformationen, angepasst, um Betriebsinformationen zum Fernsteuern der ersten Vorrichtung durch Verwenden der durch das ID-Erkennungsmittel gelesenen ID-Informationen zu erhalten; und
Fernsteuermittel (56), angepasst, um die erste Vorrichtung über ein Netzwerk durch Verwenden der erhaltenen Betriebsinformationen fernzusteuern; wobei:
das ID-Erkennungsmittel betreibbar ist, um die ID-Informationen von einer mit der ersten Vorrichtung verbundenen Peripherievorrichtung zu lesen, um ferngesteuert zu werden; und
die ID-Informationen in der Peripherievorrichtung bereitgestellt werden; wobei:
die Betriebsinformationen durch einen Hersteller der ersten Vorrichtung bei einem Informationsbereitstellungsserver auf dem Netzwerk verfügbar gemacht werden, wobei der Informationsbereitstellungsserver ein durch den Hersteller der ersten Vorrichtung zentral verwalteter spezieller Informationsbereitstellungsserver ist, und die ID-Informationen einen Uniform Resource Locator, URL, oder Uniform Resource Identifier, URI, zum Zugreifen auf den Informationsbereitstellungsserver zum Herunterladen der Betriebsinformationen von dem Informationsbereitstellungsserver anzeigen.

16. Vorrichtung zum Fernsteuern einer ersten Vorrichtung nach Anspruch 15, wobei die Betriebsinformationen
Anwenderschnittstelleninformationen sind, die einen Betriebsbildschirm oder ein Betriebsverfahren anzeigen, die zum Betreiben der ersten Vorrichtung durch die Vorrichtung geeignet sind.

17. Vorrichtung zum Fernsteuern einer ersten Vorrichtung nach Anspruch 15, wobei die Vorrichtung ein tragbares Informationsterminal einschließlich eines Mobiltelefons oder eines Personal Digital Assistant, PDA, ist, das/der einem Benutzer gehört.

18. Vorrichtung zum Fernsteuern einer ersten Vorrichtung nach Anspruch 15, wobei die ID-Informationen an einem Ort bereitgestellt werden, der einer durch die erste Vorrichtung umgesetzten Funktion zugeordnet wird, um ferngesteuert zu werden.

19. Vorrichtung zum Fernsteuern einer ersten Vorrichtung nach Anspruch 15, wobei die ID-Informationen durch ein Format, einschließlich RFID, Touch Net, Barcode, zweidimensionalen Barcode, Cybercode, Infrarotübertragung und Bluetooth®-Verbindung in einem extremen Low-Power-Modus, dargestellt werden.

20. Steuerverfahren für eine Vorrichtung (50), die eine erste Vorrichtung (10) fernsteuert, umfassend:
einen ID-Erkennungsschritt zum Lesen von ID-Informationen, die eine Netzwerkadresse der ersten Vorrichtung einschließen oder ein Verfahren zum Zugreifen auf einen Informationsspeicherort (50) anzeigen, der für die Vorrichtung (50) speziell bereitstellt wird;
einen Netzwerkverbindungsschritt zum Einrichten von Netzwerkverbindung;
einen Erhaltungsschritt für Betriebsinformationen zum Erhalten von Betriebsinformationen zum Fernsteuern der ersten Vorrichtung durch Verwenden der durch den ID-Erkennungsschritt gelesenen ID-Informationen;
einen Fernsteuerschritt zum Fernsteuern der ersten Vorrichtung über ein Netzwerk durch Verwenden der erhaltenen Betriebsinformationen, wobei:
der ID-Erkennungsschritt Lesen der ID-Informationen von einer mit der ersten Vorrichtung verbundenen Peripherievorrichtung umfasst, um ferngesteuert zu werden, wobei die ID-Informationen in der Peripherievorrichtung bereitgestellt werden; wobei
die Betriebsinformationen durch einen Hersteller der ersten Vorrichtung bei einem Informationsbereitstellungsserver auf dem Netzwerk verfügbar gemacht werden, wobei der Informationsbereitstellungsserver ein durch den Hersteller der ersten Vorrichtung zentral verwalteter spezieller Informationsbereitstellungsserver ist, und die ID-Informationen einen Uniform Resource Locator, URL, oder Uniform Resource Identifier, URI, zum Zugreifen auf den Informationsbereitstellungsserver zum Herunterladen der Betriebsinformationen von dem Informationsbereitstellungsserver anzeigen.

21. Steuerverfahren für eine Vorrichtung, die eine erste Vorrichtung nach Anspruch 20 fernsteuert, wobei die Betriebsinformationen Anwenderschnittstelleninformationen sind, die einen Betriebsbildschirm oder ein Betriebsverfahren anzeigen, die zum Betreiben der ersten Vorrichtung durch die Vorrichtung geeignet sind.

22. Steuerverfahren für eine Vorrichtung, die eine erste Vorrichtung nach Anspruch 20 fernsteuert, wobei die Vorrichtung, die an ein Netzwerk verbindbar ist, ein tragbares Informationsterminal einschließlich eines Mobiltelefons oder eines Personal Digital Assistant, PDA, ist, das/der einem Benutzer gehört.

23. Steuerverfahren für eine Vorrichtung, die eine erste Vorrichtung nach Anspruch 20 fernsteuert, wobei die ID-Informationen an einem Ort bereitgestellt werden, der einer durch die erste Vorrichtung umgesetzten Funktion zugeordnet wird, um ferngesteuert zu werden.

24. Steuerverfahren für eine Vorrichtung, die eine erste Vorrichtung nach Anspruch 23 fernsteuert, wobei:
die ID-Informationen ein Verfahren zum Zugreifen auf einen Informationsspeicherort aufweisen, der für die Vorrichtung speziell bereitgestellt wird; und
der Erhaltungsschritt für Betriebsinformationen die in den Informationsspeicherort geschriebenen Betriebsinformationen zum Fernsteuern der ersten Vorrichtung erhält.

25. Steuerverfahren für eine Vorrichtung, die eine erste Vorrichtung nach Anspruch 20 fernsteuert, wobei die ID-Informationen durch ein Format dargestellt werden, einschließlich einer RFID, Touch Net, eines Barcodes, eines zweidimensionalen Barcodes, eines Cybercodes, Infrarotübertragung und Bluetooth-Verbindung in einem extremen Low-Power-Modus.

26. System, das eine Vorrichtung (10), um durch eine erste Vorrichtung (50) ferngesteuert zu werden, und eine mit der Vorrichtung verbundene Peripherievorrichtung umfasst, um ferngesteuert zu werden, wobei das System umfasst:
ID-Informationen, die eine Netzwerkadresse der Vorrichtung anzeigen oder ein Zugriffsverfahren für Informationsaustausch anzeigen, wobei die ID-Informationen in der mit der Vorrichtung verbundenen Peripherievorrichtung (40) bereitgestellt werden;
Netzwerkverbindungsmittel, angepasst, um Netzwerkverbindung einzurichten;
Bereitststellungsmittel für Betriebsinformationen, angepasst, um Betriebsinformationen zum Fernsteuern der Vorrichtung an die erste Vorrichtung bereitzustellen; und
Betriebsmittel, angepasst, um durch die erste Vorrichtung durch Fernsteuern betrieben zu werden;
wobei
die Betriebsinformationen durch einen Hersteller der Vorrichtung bei einem Informationsbereitstellungsserver auf einem Netzwerk verfügbar gemacht werden, wobei der Informationsbereitstellungsserver ein durch den Hersteller der Vorrichtung zentral verwalteter spezieller Informationsbereitstellungsserver ist, und die ID-Informationen einen Uniform Resource Locator, URL, oder Uniform Resource Identifier, URI, zum Zugreifen auf den Informationsbereitstellungsserver anzeigen, um der ersten Vorrichtung zu erlauben, die Betriebsinformationen von dem Informationsbereitstellungsserver herunterzuladen.

27. System nach Anspruch 26, wobei die Betriebsinformationen Anwenderschnittstelleninformations-Betriebsbildschirm oder ein Betriebsverfahren zum Betreiben der Vorrichtung durch die erste Vorrichtung sind.

28. System nach Anspruch 26, wobei die erste Vorrichtung ein tragbares Informationsterminal einschließlich eines Mobiltelefons oder eines Personal Digital Assistant, PDA, ist, das/der einem Benutzer gehört.

29. System nach Anspruch 26, wobei die Vorrichtung eine relativ große Vorrichtung ist, die in einer Umgebung verwendet wird, in der die Vorrichtung installiert wird, einschließlich eines Notebook-Computers, eines Desktop-Computers, eines LCD-Projektors oder eines Fernsehempfängers.

30. System nach Anspruch 26, wobei die ID-Informationen durch ein Format dargestellt werden, einschließlich einer RFID, Touch Net, Cybercode, eines Barcodes, eines zweidimensionalen Barcodes, einer Infrarotübertragung und Bluetooth-Verbindung in einem extremen Low-Power-Modus.

31. Steuerverfahren für eine Vorrichtung (10), um durch eine erste Vorrichtung (50) ferngesteuert zu werden, umfassend:
einen Schritt, der ersten Vorrichtung zu erlauben, ID-Informationen, die eine Netzwerkadresse der Vorrichtung anzeigen oder ein Zugriffsverfahren für Informationsaustausch anzeigen, von einer mit der Vorrichtung verbundenen Peripherievorrichtung (40) zu lesen;
einen Netzwerkverbindungsschritt zum Einrichten von Netzwerkverbindung;
einen Bereitstellungsschritt für Betriebsinformationen zum Bereitstellen von Betriebsinformationen zum Fernsteuern der Vorrichtung an die erste Vorrichtung; und
einen Betriebsschritt, um durch die erste Vorrichtung durch Fernsteuern betrieben zu werden;
wobei
die Betriebsinformationen durch einen Hersteller der Vorrichtung bei einem Informationsbereitstellungsserver auf einem Netzwerk verfügbar gemacht werden, wobei der Informationsbereitstellungsserver ein durch den Hersteller der Vorrichtung zentral verwalteter spezieller Informationsbereitstellungsserver ist, und die ID-Informationen einen Uniform Resource Locator, URL, oder Uniform Resource Identifier, URI, zum Zugreifen auf den Informationsbereitstellungsserver anzeigen, um der ersten Vorrichtung zu erlauben, die Betriebsinformationen von dem Informationsbereitstellungsserver herunterzuladen.

32. Steuerverfahren für eine Vorrichtung, um durch eine erste Vorrichtung nach Anspruch 31 ferngesteuert zu werden, wobei die Betriebsinformationen
Anwenderschnittstelleninformationen sind, die einen Betriebsbildschirm oder ein Betriebsverfahren anzeigen, die zum Betreiben der Vorrichtung durch die erste Vorrichtung geeignet sind.

33. Steuerverfahren für eine Vorrichtung, um durch eine erste Vorrichtung nach Anspruch 31 ferngesteuert zu werden, wobei die erste Vorrichtung ein tragbares Informationsterminal einschließlich eines Mobiltelefons oder eines Personal Digital Assistant, PDA, ist, das/der einem Benutzer gehört.

34. Steuerverfahren für eine Vorrichtung, um durch eine erste Vorrichtung nach Anspruch 31 ferngesteuert zu werden, wobei die Vorrichtung eine relativ große Vorrichtung ist, die in einer Umgebung verwendet wird, in der die Vorrichtung installiert wird, einschließlich eines Notebook-Computers, eines Desktop-Computers, eines LCD-Projektors oder eines Fernsehempfängers.

35. Steuerverfahren für eine Vorrichtung, um durch eine erste Vorrichtung nach Anspruch 31 ferngesteuert zu werden, wobei die ID-Informationen durch ein Format dargestellt werden, einschließlich einer RFID, Touch Net, eines Barcodes, eines zweidimensionalen Barcodes, eines Cybercodes, Infrarotübertragung und Bluetooth-Verbindung in einem extremen Low-Power-Modus.

36. Speicherdatenträger, in dem Computersoftware physisch in einem computerlesbaren Format gespeichert wird, um einer Vorrichtung (50) zu erlauben, eine erste Vorrichtung (10) fernzusteuern, um in einem Computersystem gesteuert zu werden, wobei die Computersoftware umfasst:
einen ID-Erkennungsschritt zum Lesen von ID-Informationen, die eine Netzwerkadresse der ersten Vorrichtung anzeigen oder ein Zugriffsverfahren für Informationsaustausch anzeigen;
einen Netzwerkverbindungsschritt zum Einrichten von Netzwerkverbindung;
einen Erhaltungsschritt für Betriebsinformationen zum Erhalten von Betriebsinformationen zum Fernsteuern der ersten Vorrichtung durch Verwenden der durch den ID-Erkennungsschritt gelesenen ID-Informationen; und
einen Fernsteuerschritt zum Fernsteuern der ersten Vorrichtung über ein Netzwerk durch Verwenden der erhaltenen Betriebsinformationen; wobei der ID-Erkennungsschritt Lesen der ID-Informationen von einer mit der ersten Vorrichtung verbundenen Peripherievorrichtung umfasst, um ferngesteuert zu werden, wobei die ID-Informationen in der Peripherievorrichtung bereitgestellt werden; wobei:
die Betriebsinformationen durch einen Hersteller der ersten Vorrichtung bei einem Informationsbereitstellungsserver auf dem Netzwerk verfügbar gemacht werden, wobei der Informationsbereitstellungsserver ein durch den Hersteller der ersten Vorrichtung zentral verwalteter spezieller Informationsbereitstellungsserver ist, und die ID-Informationen einen Uniform Resource Locator, URL, oder Uniform Resource Identifier, URI, zum Zugreifen auf den Informationsbereitstellungsserver zum Herunterladen der Betriebsinformationen von dem Informationsbereitstellungsserver anzeigen.

37. Speicherdatenträger, in dem Computersoftware physisch in einem computerlesbaren Format gespeichert wird, um einer Vorrichtung (10) zu erlauben, durch eine erste Vorrichtung (50) ferngesteuert zu werden, um in einem Computersystem gesteuert zu werden, wobei die Computersoftware umfasst:
einen Schritt, der ersten Vorrichtung zu erlauben, ID-Informationen, die eine Netzwerkadresse der Vorrichtung anzeigen oder ein Zugriffsverfahren für Informationsaustausch anzeigen, von einer mit der Vorrichtung verbundenen Peripherievorrichtung (40) zu lesen;
einen Netzwerkverbindungsschritt zum Einrichten von Netzwerkverbindung;
einen Bereitstellungsschritt für Betriebsinformationen zum Bereitstellen von Betriebsinformationen zum Fernsteuern der Vorrichtung an die erste Vorrichtung; und
einen Betriebsschritt, um durch die erste Vorrichtung durch Fernsteuern betrieben zu werden;
wobei
die Betriebsinformationen durch einen Hersteller der Vorrichtung bei einem Informationsbereitstellungsserver auf einem Netzwerk verfügbar gemacht werden, wobei der Informationsbereitstellungsserver ein durch den Hersteller der Vorrichtung zentral verwalteter spezieller Informationsbereitstellungsserver ist, und die ID-Informationen einen Uniform Resource Locator, URL, oder Uniform Resource Identifier, URI, zum Zugreifen auf den Informationsbereitstellungsserver anzeigen, um der ersten Vorrichtung zu erlauben, die Betriebsinformationen von dem Informationsbereitstellungsserver herunterzuladen.

## Revendications

1. Système de commande à distance (1) conçu pour permettre à un premier dispositif (50) de commander un fonctionnement d'un second dispositif (10), le système comprenant :
des informations d'ID (INFORMATIONS D'ID ; 61) comprenant une adresse réseau du premier dispositif ou du second dispositif ou indiquant un procédé pour avoir accès à un emplacement de stockage d'informations ménagé spécialement pour le premier dispositif ;
une unité de reconnaissance d'ID (UNITE DE RECONNAISSANCE D'ID ; 18) conçue pour obtenir les informations d'ID permettant au premier dispositif d'être accessible par lecture des informations d'ID ;
un moyen de connexion réseau (17, 62) conçu pour établir une connexion réseau entre les dispositifs ;
un moyen de fourniture d'informations de fonctionnement conçu pour transférer des informations de fonctionnement pour commander à distance le second dispositif au premier dispositif à l'aide des informations d'ID obtenues ; et
un moyen de commande à distance (56) conçu pour permettre au premier dispositif de commander à distance le second dispositif à l'aide des informations de fonctionnement ; dans lequel
les informations d'ID ou l'unité de reconnaissance d'ID sont fournies dans un dispositif périphérique (40) raccordé au second dispositif qui doit être commandé à distance par le premier dispositif ; dans lequel :
les informations de fonctionnement sont rendues disponibles par un fabricant du second dispositif au niveau d'un serveur de fourniture d'informations sur un réseau, le serveur de fourniture d'informations étant un serveur de fourniture d'informations spécifique géré de manière centrale par le fabricant du second dispositif, et les informations d'ID indiquent l'un parmi un localisateur uniforme de ressources (URL pour Uniform Resource Locator) ou un identificateur uniforme de ressources (URI pour Uniform Resource Identifier) pour avoir accès au serveur de fourniture d'informations pour permettre au premier dispositif de télécharger les informations de fonctionnement à partir du serveur de fourniture d'informations.

2. Système de commande à distance selon la revendication 1, dans lequel :
l'unité de reconnaissance d'ID est conçue pour lire les informations d'ID en fonction de l'un quelconque des formats, y compris une ID par radiofréquence (RF), un ensemble de touches, un code à barres, un code à barres bidimensionnel, un cybercode, une communication infrarouge et une communication Bluetooth dans un mode de puissance extrêmement faible.

3. Système de commande à distance selon la revendication 1, dans lequel :
le moyen de réseau est conçu pour établir une connexion réseau entre les dispositifs en fonction d'un réseau local (LAN pour Local Area Network) sans fil ou câblé et/ou d'une communication Bluetooth et/ou d'un réseau téléphonique et/ou de l'Internet.

4. Système de commande à distance selon l'une quelconque des revendications 1 à 3, dans lequel les informations de fonctionnement sont des informations d'interface utilisateur indiquant un écran fonctionnel ou un procédé de fonctionnement qui convient pour faire fonctionner le second dispositif au moyen du premier dispositif.

5. Système de commande à distance selon l'une quelconque des revendications 1 à 3, dans lequel le premier dispositif est un terminal d'informations portable, y compris un téléphone cellulaire ou un assistant numérique personnel (PDA pour Personal Digital Assistant) détenu par un utilisateur.

6. Système de commande à distance selon l'une quelconque des revendications 1 à 3, dans lequel le second dispositif est un dispositif relativement important utilisé dans un environnement dans lequel le dispositif est installé, y compris un ordinateur bloc-notes, un ordinateur de bureau, un projecteur à cristaux liquides ou un récepteur de télévision.

7. Système de commande à distance selon l'une quelconque des revendications 1 à 3, dans lequel les informations d'ID ou l'unité de reconnaissance d'ID associée sont installées dans un endroit qui est avec une fonction mise en oeuvre par le second dispositif qui doit être commandé à distance par le premier dispositif.

8. Procédé de commande à distance qui permet à un premier dispositif connecté à un réseau de commander un fonctionnement d'un second dispositif, comprenant :
une étape de reconnaissance d'ID (S2, S13) consistant à lire des informations d'ID comprenant une adresse réseau du premier dispositif ou du second dispositif ou indiquant un procédé pour avoir accès à un emplacement de stockage d'informations ménagé spécialement pour le premier dispositif de sorte à obtenir les informations d'ID permettant au premier dispositif d'être accessible ;
une étape de connexion réseau (S5, S15) consistant à établir une connexion réseau entre les dispositifs ;
une étape de fourniture d'informations de fonctionnement (S6, S16) consistant à transférer des informations de fonctionnement pour commander à distance le second dispositif au premier dispositif à l'aide des informations d'ID obtenues par l'étape de reconnaissance d'ID ; et
une étape de commande à distance (S7, S8, S17, S18) consistant à permettre au premier dispositif de commander à distance le second dispositif à l'aide des informations de fonctionnement ; dans lequel :
les informations d'ID sont fournies dans un dispositif périphérique raccordé au second dispositif qui doit être commandé à distance par le premier dispositif ; dans lequel :
les informations de fonctionnement sont rendues disponibles par un fabricant du second dispositif au niveau d'un serveur de fourniture d'informations sur un réseau, le serveur de fourniture d'informations étant un serveur de fourniture d'informations spécifique géré de manière centrale par le fabricant du second dispositif, et les informations d'ID indiquent l'un parmi un localisateur uniforme de ressources (URL) ou un identificateur uniforme de ressources (URI) pour avoir accès au serveur de fourniture d'informations pour permettre au premier dispositif de télécharger les informations de fonctionnement à partir du serveur de fourniture d'informations.

9. Procédé de commande à distance selon la revendication 8, dans lequel :
l'unité de reconnaissance d'ID lit les informations d'ID en fonction de l'un quelconque des formats, y compris une ID par radiofréquence (RF), un ensemble de touches, un code à barres, un code à barres bidimensionnel, un cybercode, une communication infrarouge et une communication Bluetooth dans un mode de puissance extrêmement faible.

10. Procédé de commande à distance selon la revendication 8, dans lequel :
l'étape de connexion réseau établit une connexion réseau entre les dispositifs en fonction d'un réseau local (LAN) sans fil ou câblé et/ou d'une communication Bluetooth et/ou d'un réseau téléphonique et/ou de l'Internet.

11. Procédé de commande à distance selon l'une quelconque des revendications 8 à 10, dans lequel les informations de fonctionnement sont des informations d'interface utilisateur indiquant un écran fonctionnel ou un procédé de fonctionnement qui convient pour faire fonctionner le second dispositif au moyen du premier dispositif.

12. Procédé de commande à distance selon l'une quelconque des revendications 8 à 10, dans lequel le premier dispositif est un terminal d'informations portable, y compris un téléphone cellulaire ou un assistant numérique personnel (PDA) détenu par un utilisateur.

13. Procédé de commande à distance selon l'une quelconque des revendications 8 à 10, dans lequel le second dispositif est un dispositif relativement important utilisé dans un environnement dans lequel le dispositif est installé, y compris un ordinateur bloc-notes, un ordinateur de bureau, un projecteur à cristaux liquides ou un récepteur de télévision.

14. Procédé de commande à distance selon l'une quelconque des revendications 8 à 10, dans lequel les informations d'ID sont fournies dans un endroit qui est associé à une fonction mise en oeuvre par le second dispositif qui doit être commandé à distance par le premier dispositif.

15. Dispositif (50) pour commander à distance un premier dispositif (10), comprenant :
un moyen de reconnaissance d'ID (UNITE DE RECONNAISSANCE D'ID) conçu pour lire des informations d'ID comprenant une adresse réseau du premier dispositif ou indiquant un procédé pour avoir accès à un emplacement de stockage d'informations ménagé spécialement pour le dispositif (50) ;
un moyen de connexion réseau (62) conçu pour établir une connexion réseau ;
un moyen d'obtention d'informations de fonctionnement conçu pour obtenir des informations de fonctionnement pour commander à distance le premier dispositif à l'aide des informations d'ID lues par le moyen de reconnaissance d'ID ; et
un moyen de commande à distance (56) conçu pour commander à distance le premier dispositif par le biais d'un réseau à l'aide des informations de fonctionnement obtenues ; dans lequel :
le moyen de reconnaissance d'ID peut être mis en fonctionnement pour lire les informations d'ID à partir d'un dispositif périphérique raccordé au premier dispositif qui doit être commandé à distance ; et
les informations d'ID sont fournies dans le dispositif périphérique ; dans lequel :
les informations de fonctionnement sont rendues disponibles par un fabricant du premier dispositif au niveau d'un serveur de fourniture d'informations sur le réseau, le serveur de fourniture d'informations étant un serveur de fourniture d'informations spécifique géré de manière centrale par le fabricant du premier dispositif, et les informations d'ID indiquent l'un parmi un localisateur uniforme de ressources (URL) ou un identificateur uniforme de ressources (URI) pour avoir accès au serveur de fourniture d'informations pour télécharger les informations de fonctionnement à partir du serveur de fourniture d'informations.

16. Dispositif pour commander à distance un premier dispositif selon la revendication 15, dans lequel les informations de fonctionnement sont des informations d'interface utilisateur indiquant un écran fonctionnel ou un procédé de fonctionnement qui convient pour faire fonctionner le premier dispositif au moyen du dispositif.

17. Dispositif pour commander à distance un premier dispositif selon la revendication 15, dans lequel le dispositif est un terminal d'informations portable, y compris un téléphone cellulaire ou un assistant numérique personnel (PDA) détenu par un utilisateur.

18. Dispositif pour commander à distance un premier dispositif selon la revendication 15, dans lequel les informations d'ID sont fournies dans un endroit qui est associé à une fonction mise en oeuvre par le premier dispositif qui doit être commandé à distance.

19. Dispositif pour commander à distance un premier dispositif selon la revendication 15, dans lequel les informations d'ID sont représentées par l'un quelconque des formats, y compris une ID par radiofréquence (RF), un ensemble de touches, un code à barres, un code à barres bidimensionnel, un cybercode, une communication infrarouge et une communication Bluetooth® dans un mode de puissance extrêmement faible.

20. Procédé de commande pour un dispositif (50) commandant à distance un premier dispositif (10), comprenant :
une étape de reconnaissance d'ID consistant à lire des informations d'ID comprenant une adresse réseau du premier dispositif ou indiquant un procédé pour avoir accès à un emplacement de stockage d'informations ménagé spécialement pour le dispositif (50) ;
une étape de connexion réseau consistant à établir une connexion réseau ;
une étape d'obtention d'informations de fonctionnement consistant à obtenir des informations de fonctionnement pour commander à distance le premier dispositif à l'aide des informations d'ID lues par l'étape de reconnaissance d'ID ;
une étape de commande à distance consistant à commander à distance le premier dispositif par le biais d'un réseau à l'aide des informations de fonctionnement obtenues, dans lequel :
l'étape de reconnaissance d'ID consiste à lire les informations d'ID à partir d'un dispositif périphérique raccordé au premier dispositif qui doit être commandé à distance, les informations d'ID étant fournies dans le dispositif périphérique ; dans lequel
les informations de fonctionnement sont rendues disponibles par un fabricant du premier dispositif au niveau d'un serveur de fourniture d'informations sur le réseau, le serveur de fourniture d'informations étant un serveur de fourniture d'informations spécifique géré de manière centrale par le fabricant du premier dispositif, et les informations d'ID indiquent l'un parmi un localisateur uniforme de ressources (URL) ou un identificateur uniforme de ressources (URI) pour avoir accès au serveur de fourniture d'informations pour télécharger les informations de fonctionnement à partir du serveur de fourniture d'informations.

21. Procédé de commande pour un dispositif commandant à distance un premier dispositif selon la revendication 20, dans lequel les informations de fonctionnement sont des informations d'interface utilisateur indiquant un écran fonctionnel ou un procédé de fonctionnement qui convient pour faire fonctionner le premier dispositif au moyen du dispositif.

22. Procédé de commande pour un dispositif commandant à distance un premier dispositif selon la revendication 20, dans lequel le dispositif qui peut être connecté à un réseau, est un terminal d'informations portable, y compris un téléphone cellulaire ou un assistant numérique personnel (PDA) détenu par un utilisateur.

23. Procédé de commande pour un dispositif commandant à distance un premier dispositif selon la revendication 20, dans lequel les informations d'ID sont fournies dans un endroit qui est associé à une fonction mise en oeuvre par le premier dispositif qui doit être commandé à distance.

24. Procédé de commande pour un dispositif commandant à distance un premier dispositif selon la revendication 23, dans lequel :
les informations d'ID comprennent un procédé pour avoir accès à un emplacement de stockage d'informations ménagé spécialement pour le dispositif ; et
l'étape d'obtention d'informations de fonctionnement obtient les informations de fonctionnement, écrites dans l'emplacement de stockage d'informations, pour commander à distance le premier dispositif.

25. Procédé de commande pour un dispositif commandant à distance un premier dispositif selon la revendication 20, dans lequel les informations d'ID sont représentées par l'un quelconque des formats, y compris une ID par radiofréquence (RF), un ensemble de touches, un code à barres, un code à barres bidimensionnel, un cybercode, une communication infrarouge et une communication Bluetooth dans un mode de puissance extrêmement faible.

26. Système comprenant un dispositif (10) pour être commandé à distance par un premier dispositif (50) et un dispositif périphérique raccordé au dispositif pour être commandé à distance, le système comprenant :
des informations d'ID indiquant une adresse réseau du dispositif ou indiquant un procédé d'accès pour échanger des informations, les informations d'ID étant fournies dans le dispositif périphérique (40) raccordé au dispositif ;
un moyen de connexion réseau conçu pour établir une connexion réseau ;
un moyen de fourniture d'informations de fonctionnement conçu pour fournir des informations de fonctionnement pour commander à distance le dispositif au premier dispositif ; et
un moyen de fonctionnement conçu pour être mis en fonctionnement en étant commandé à distance par le premier dispositif ; dans lequel
les informations de fonctionnement sont rendues disponibles par un fabricant du dispositif au niveau d'un serveur de fourniture d'informations sur un réseau, le serveur de fourniture d'informations étant un serveur de fourniture d'informations spécifique géré de manière centrale par le fabricant du dispositif, et les informations d'ID indiquent l'un parmi un localisateur uniforme de ressources (URL) ou un identificateur uniforme de ressources (URI) pour avoir accès au serveur de fourniture d'informations pour permettre au premier dispositif de télécharger les informations de fonctionnement à partir du serveur de fourniture d'informations.

27. Système selon la revendication 26, dans lequel les informations de fonctionnement sont un écran fonctionnel d'informations d'interface utilisateur ou un procédé de fonctionnement faisant fonctionner le dispositif au moyen du premier dispositif.

28. Système selon la revendication 26, dans lequel le premier dispositif est un terminal d'informations portable, y compris un téléphone cellulaire ou un assistant numérique personnel (PDA) détenu par un utilisateur.

29. Système selon la revendication 26, dans lequel le dispositif est un dispositif relativement important utilisé dans un environnement dans lequel le dispositif est installé, y compris un ordinateur bloc-notes, un ordinateur de bureau, un projecteur à cristaux liquides ou un récepteur de télévision.

30. Système selon la revendication 26, dans lequel les informations d'ID sont représentées par l'un quelconque des formats, y compris une ID par radiofréquence (RF), un ensemble de touches, un cybercode, un code à barres, un code à barres bidimensionnel, une communication infrarouge et une communication Bluetooth dans un mode de puissance extrêmement faible.

31. Procédé de commande pour un dispositif (10) qui doit être commandé à distance par un premier dispositif (50), comprenant :
une étape consistant à permettre au premier dispositif de lire des informations d'ID indiquant une adresse réseau du dispositif ou indiquant un procédé d'accès pour échanger des informations à partir d'un dispositif périphérique (40) raccordé au dispositif;
une étape de connexion réseau consistant à établir une connexion réseau ;
une étape de fourniture d'informations de fonctionnement consistant à fournir des informations de fonctionnement pour commander à distance le dispositif au premier dispositif ; et
une étape de fonctionnement consistant à être exécutée en étant commandée à distance par le premier dispositif ; dans lequel
les informations de fonctionnement sont rendues disponibles par un fabricant du dispositif au niveau d'un serveur de fourniture d'informations sur un réseau, le serveur de fourniture d'informations étant un serveur de fourniture d'informations spécifique géré de manière centrale par le fabricant du dispositif, et les informations d'ID indiquent l'un parmi un localisateur uniforme de ressources (URL) ou un identificateur uniforme de ressources (URI) pour avoir accès au serveur de fourniture d'informations pour permettre au premier dispositif de télécharger les informations de fonctionnement à partir du serveur de fourniture d'informations.

32. Procédé de commande pour un dispositif qui doit être commandé à distance par un premier dispositif selon la revendication 31, dans lequel les informations de fonctionnement sont des informations d'interface utilisateur indiquant un écran fonctionnel ou un procédé de fonctionnement qui convient pour faire fonctionner le dispositif au moyen du premier dispositif.

33. Procédé de commande pour un dispositif qui doit être commandé à distance par un premier dispositif selon la revendication 31, dans lequel le premier dispositif est un terminal d'informations portable, y compris un téléphone cellulaire ou un assistant numérique personnel (PDA) détenu par un utilisateur.

34. Procédé de commande pour un dispositif qui doit être commandé à distance par un premier dispositif selon la revendication 31, dans lequel le dispositif est un dispositif relativement important utilisé dans un environnement dans lequel le dispositif est installé, y compris un ordinateur bloc-notes, un ordinateur de bureau, un projecteur à cristaux liquides ou un récepteur de télévision.

35. Procédé de commande pour un dispositif qui doit être commandé à distance par un premier dispositif selon la revendication 31, dans lequel les informations d'ID sont représentées par l'un quelconque des formats, y compris une ID par radiofréquence (RF), un ensemble de touches, un code à barres, un code à barres bidimensionnel, un cybercode, une communication infrarouge et une communication Bluetooth dans un mode de puissance extrêmement faible.

36. Support de stockage dans lequel un logiciel informatique pour permettre à un dispositif (50) pour commander à distance un premier dispositif (10) d'être commandé dans un système informatique, est stocké physiquement dans un format lisible par ordinateur, ledit logiciel informatique comprenant :
une étape de reconnaissance d'ID consistant à lire des informations d'ID indiquant une adresse réseau du premier dispositif ou indiquant un procédé d'accès pour échanger des informations ;
une étape de connexion réseau consistant à établir une connexion réseau ;
une étape d'obtention d'informations de fonctionnement consistant à obtenir des informations de fonctionnement pour commander à distance le premier dispositif à l'aide des informations d'ID lues par l'étape de reconnaissance d'ID ; et
une étape de commande à distance consistant à commander à distance le premier dispositif par le biais d'un réseau à l'aide des informations de fonctionnement obtenues ; dans lequel :
l'étape de reconnaissance d'ID consiste à lire les informations d'ID à partir d'un dispositif périphérique raccordé au premier dispositif qui doit être commandé à distance, les informations d'ID étant fournies dans le dispositif périphérique ; dans lequel :
les informations de fonctionnement sont rendues disponibles par un fabricant du premier dispositif au niveau d'un serveur de fourniture d'informations sur le réseau, le serveur de fourniture d'informations étant un serveur de fourniture d'informations spécifique géré de manière centrale par le fabricant du premier dispositif, et les informations d'ID indiquent l'un parmi un localisateur uniforme de ressources (URL) ou un identificateur uniforme de ressources (URI) pour avoir accès au serveur de fourniture d'informations pour télécharger les informations de fonctionnement à partir du serveur de fourniture d'informations.

37. Support de stockage dans lequel un logiciel informatique pour permettre à un dispositif (10) pour être commandé à distance par un premier dispositif (50) d'être commandé dans un système informatique, est stocké physiquement dans un format lisible par ordinateur, ledit logiciel informatique comprenant :
une étape consistant à permettre au premier dispositif de lire des informations d'ID indiquant une adresse réseau du dispositif ou indiquant un procédé d'accès pour échanger des informations à partir d'un dispositif périphérique (40) raccordé au dispositif ;
une étape de connexion réseau consistant à établir une connexion réseau ;
une étape de fourniture d'informations de fonctionnement consistant à fournir des informations de fonctionnement pour commander à distance le dispositif au premier dispositif ; et
une étape de fonctionnement consistant à être exécutée en étant commandée à distance par le premier dispositif ; dans lequel
les informations de fonctionnement sont rendues disponibles par un fabricant du dispositif au niveau d'un serveur de fourniture d'informations sur le réseau, le serveur de fourniture d'informations étant un serveur de fourniture d'informations spécifique géré de manière centrale par le fabricant du dispositif, et les informations d'ID indiquent l'un parmi un localisateur uniforme de ressources (URL) ou un identificateur uniforme de ressources (URI) pour avoir accès au serveur de fourniture d'informations pour permettre au premier dispositif de télécharger les informations de fonctionnement à partir du serveur de fourniture d'informations.
